# EUROPEAN PATENT APPLICATION

(11) **EP 4 557 882 A1**
(43) Date of publication of application: **21.05.2025**
(21) Application number: 23838896.1
(22) Date of filing: 10.07.2023
(51) Int. Cl.: H04W 88/02

(54) **ELECTRONIC DEVICE AND METHOD FOR WIRELESS COMMUNICATION SYSTEM, AND STORAGE MEDIUM**

(30) Priority: 13.07.2022 CN 202210826602
(71) Applicant: Sony Group Corporation, Tokyo 108-0075 (JP)
(72) Inventor: ZHANG, Zhaoyu, Beijing 100027 (CN); LI, Haojin, Beijing 100027 (CN)
(74) Representative: D Young & Co LLP
(86) International application number: PCT/CN2023/106549
(87) International publication number: WO 2024/012404

(57) **Abstract**

The present invention relates to an electronic device and method for a wireless communication system, and a storage medium. The electronic device for a control device of the wireless communication system comprises: a processing circuit, configured to: send a multiplexing signal to a terminal device, wherein the multiplexing signal multiplexes a communication signal and a sensing signal, and the sensing signal is at least used for sensing the distance between the terminal device and the electronic device, the angle between the terminal device and the electronic device, and/or the moving speed of the terminal device, so as to determine a position of the terminal device; and receive an echo signal generated by at least reflection, scattering and/or diffraction of the sensing signal by the terminal device.

## Description

### CROSS-REFERENCE TO RELATED APPLICATIONS

This application is based on and claims priority to Chinese Patent Application 202210826602.7, filed on July 13, 2022 and entitled "ELECTRONIC DEVICE, METHOD AND STORAGE MEDIUM FOR WIRELESS COMMUNICATION SYSTEM", which is incorporated herein by reference in its entirety.

### TECHNICAL FIELD

The present disclosure relates generally to wireless communication systems and, specifically, to technologies related to integrated sensing and communication (ISAC).

### BACKGROUND

Generally, communication can represent information transmission between two or more parties. Generally, sensing can represent detection of a state, a feature, and the like of a thing in an environment. Use cases of sensing can vary according to application requirements of different industries, such as automatic driving vehicle/unmanned aerial vehicle sensing, environmental real-time monitoring, and weather or air pollution monitoring. A sensing target can be, for example, sensing of an obstacle, sensing of a position of an object, sensing of a moving speed of an object, and sensing of air humidity/particle concentration.

Conventionally, communication and sensing exist independently. Therefore, a solution for integrated sensing and communication is needed.

### SUMMARY

The present disclosure proposes a solution related to integrated sensing and communication. Specifically, the present disclosure provides an electronic device, a method and a storage medium for a wireless communication system.

One aspect of the present disclosure relates to an electronic device for a control device side of a wireless communication system, including a processing circuit configured to: transmit a multiplexed signal to a terminal device, where the multiplexed signal multiplexes a communication signal and a sensing signal, the sensing signal is at least used for sensing a distance between the terminal device and the electronic device, an angle between the terminal device and the electronic device, and/or a moving speed of the terminal device so as to determine a location of the terminal device, and receive an echo signal resulting from at least reflection, refraction and/or diffraction of the sensing signal by the terminal device.

Another aspect of the present disclosure relates to a method for a control device side of a wireless communication system, including: transmitting a multiplexed signal to a terminal device, where the multiplexed signal multiplexes a communication signal and a sensing signal, the sensing signal is at least used for sensing a distance between the terminal device and the electronic device, an angle between the terminal device and the electronic device, and/or a moving speed of the terminal device so as to determine a location of the terminal device, and receiving an echo signal resulting from at least reflection, refraction and/or diffraction of the sensing signal by the terminal device.

Another aspect of the present disclosure relates to an electronic device for a terminal device side of a wireless communication system, including: a processing circuit configured to receive a multiplexed signal from a base station, where the multiplexed signal multiplexes a communication signal and a sensing signal, where an echo signal resulting from at least reflection, refraction and/or diffraction of the sensing signal by the electronic device is transmitted to at least one or more base stations that include the base station, and where the sensing signal is at least used for sensing a distance between the electronic device and the base station, an angle between the electronic device and the base station, and/or a moving speed of the electronic device so as to determine a location of the electronic device.

Another aspect of the present disclosure relates to a method for a terminal device side of a wireless communication system, including: receiving a multiplexed signal from a base station, where the multiplexed signal multiplexes a communication signal and a sensing signal, where an echo signal resulting from at least reflection, refraction and/or diffraction of the sensing signal by the electronic device is transmitted to at least one or more base stations that include the base station, and where the sensing signal is at least used for sensing a distance between the electronic device and the base station, an angle between the electronic device and the base station, and/or a moving speed of the electronic device so as to determine a location of the electronic device.

Another aspect of the present disclosure relates to an electronic device for a core network device side of a wireless communication system, including: a processing circuit configured to: receive, from a base station, information indicating an echo signal resulting from at least reflection, refraction and/or diffraction of a sensing signal by a terminal device, determine a sensing result for the terminal device at least based on a difference between the sensing signal and the echo signal, where the sensing result includes a distance between the terminal device and the base station, an angle between the terminal device and the base station, a moving speed of the terminal device, and/or a location of the terminal device, and transmit the sensing result to the base station.

Another aspect of the present disclosure relates to a method for a core network device side of a wireless communication system, including: receiving, from a base station, information indicating an echo signal resulting from at least reflection, refraction and/or diffraction of a sensing signal by a terminal device, determining a sensing result for the terminal device at least based on a difference between the sensing signal and the echo signal, where the sensing result includes a distance between the terminal device and the base station, an angle between the terminal device and the base station, a moving speed of the terminal device, and/or a location of the terminal device, and transmitting the sensing result to the base station.

Another aspect of the present disclosure relates to a non-transitory computer readable storage medium storing executable instructions which, when executed, implement the method of the foregoing aspects.

Another aspect of the present disclosure relates to a device. The device includes: a processor; and a storage apparatus that stores executable instructions which, when executed, implement the method of the foregoing aspects.

The above summary is provided to summarize some exemplary embodiments in order to provide a basic understanding of the various aspects of the subject matter described herein. Therefore, the above-described features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF THE DRAWINGS

A better understanding of the present disclosure can be achieved by referring to the detailed description given hereinafter in connection with the accompanying drawings. The same or similar reference numerals are used in the accompanying drawings to denote the same or similar components. The accompanying drawings together with the following detailed description are included in the specification and form a part of the specification, and are used to exemplify the embodiments of the present disclosure and explain the principles and advantages of the present disclosure; where:
FIG. 1 schematically illustrates various sensing links in integrated sensing and communication;
FIG. 2A schematically illustrates an exemplary scenario of integrated sensing and communication;
FIG. 2B schematically illustrates an exemplary application of integrated sensing and communication;
FIG. 3 schematically illustrates a conceptual configuration of an electronic device of a control device side according to an embodiment of the present disclosure;
FIG. 4 schematically illustrates a conceptual operation procedure of an electronic device of a control device side according to an embodiment of the present disclosure.
FIG. 5 schematically illustrates a schematic configuration for a multiplexed signal of a communication signal and a sensing signal according to an embodiment of the present disclosure;
FIG. 6 schematically illustrates a mobile communication positioning technology used in 5G;
FIG. 7 schematically illustrates a conceptual configuration of an electronic device of a terminal device side according to an embodiment of the present disclosure;
FIG. 8 schematically illustrates a conceptual operation procedure of an electronic device of a terminal device side according to an embodiment of the present disclosure.
FIG. 9 schematically illustrates a conceptual configuration of an electronic device of a core network side according to an embodiment of the present disclosure;
FIG. 10 schematically illustrates a conceptual operation procedure of an electronic device of a core network side according to an embodiment of the present disclosure;
FIG. 11A schematically illustrates an exemplary sensing principle for sensing a position of a terminal device according to an embodiment of the present disclosure;
FIG. 11B schematically illustrates an exemplary sensing principle for sensing a position of a terminal device according to an embodiment of the present disclosure;
FIG. 12A schematically illustrates exemplary information interaction according to an embodiment of the present disclosure;
FIG. 12B schematically illustrates exemplary information interaction according to an embodiment of the present disclosure;
FIG. 13 is a block diagram of an example structure of a computer as an information processing device that can be used in an embodiment of the present disclosure;
FIG. 14 is a block diagram illustrating a first example of a schematic configuration of a gNB to which the technology of the present disclosure can be applied;
FIG. 15 is a block diagram illustrating a second example of a schematic configuration of a gNB to which the technology of the present disclosure can be applied;
FIG. 16 is a block diagram illustrating an example of a schematic configuration of an smartphone to which the technology of the present disclosure can be applied; and
FIG. 17 is a block diagram illustrating an example of a schematic configuration of a car navigation device to which the technology of the present disclosure can be applied.

Although the embodiments described in the present disclosure can have various modifications and alternatives, specific embodiments thereof are illustrated as examples in the accompany drawings and described in detail in this specification. It should be understood that the drawings and detailed description thereof are not intended to limit embodiments to the specific forms disclosed, but to cover all modifications, equivalents, and alternatives falling within the spirit and scope of the claims.

### DESCRIPTION OF EMBODIMENTS

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

Typically, a wireless communication system includes at least a control device, a terminal device, and a device of a core network side.

In the present disclosure, the term "base station" or "control device" has the full breadth of its ordinary meaning, and at least includes a wireless communication station that is a part of a wireless communication system or a radio system to facilitate communication. As an example, the base station can be, for example, a 4G communications standard eNB, a 5G NR communications standard gNB, a 6G communications standard base station, a remote radio head, a radio access point, an unmanned aerial vehicle control station, or a communications apparatus that performs a similar function. In the present disclosure, the "base station" and the "control device" can be used interchangeably, or the "control device" can be implemented as part of the "base station". The following describes an application example of the base station/terminal device in detail with reference to the accompanying drawings by using the base station as an example.

In the present disclosure, the term "terminal device" or "user equipment (UE)" has the full breadth of its ordinary meaning, and at least includes a terminal device that is a part of a wireless communication system or a radio system to facilitate communication. For example, the terminal device can be a terminal device such as a mobile phone, a laptop computer, a tablet computer, an in-vehicle communication device, a wearable device, a sensor, or a component thereof. In the present disclosure, "terminal device" and "user equipment" (hereinafter referred to as "UE" for short) can be interchangeably used, or "terminal device" can be implemented as part of "user equipment".

In the present disclosure, the term "control device side"/"base station side" has all the breadth of its ordinary meaning, and generally indicates a side that transmits data in downlink of a communication system. Similarly, the term "terminal device side"/"user equipment side" has all the breadth of its ordinary meaning, and can correspondingly indicate a side that receives data in downlink of a communication system.

It should be noted that although the following describes the embodiments of the present disclosure mainly based on a communication system including a base station and user equipment, these descriptions can be correspondingly extended to a case that a communication system includes any other types of devices of a control device side and a terminal device side. For example, in a downlink case, an operation on a control device side can correspond to an operation of the base station, and an operation on a user equipment side can correspondingly correspond to an operation of the terminal device.

In the present disclosure, the term "device of the core network side" or "entity of the core network side" has all the breadth of its ordinary meaning, and can be a network element device that provides one or more functions on the core network side, or in appropriate cases, can be software and/or a hardware module that provides one or more functions on the core network side. In particular, in a case where one or more functions of the core network side are provided in a distributed manner, the "device of the core network side" or "entity of the core network side" can be a collective term of devices and/or modules that implement the one or more functions. In the following, the "device of the core network side" or "entity of the core network side" is sometimes referred to as "core network" for short.

As described in the Background, conventionally, communication and sensing exist independently. However, there are many disadvantages to separate communication and sensing.

On the one hand, the conventional sensing technologies (for example, wireless sensing technologies) have many limitations per se. For example, in the conventional sensing technology, when multiple devices are present in a same environment for sensing, interference can occur between the devices that use a same spectrum. For another example, the conventional sensing technology relates to a dedicated component of a dedicated system, such as a radar/laser radar device, and therefore requires relatively high device costs. In addition, the dedicated system is separated from an actual service application, and therefore it is difficult to provide a service application using a sensing result very well. For another example, a coverage area of a communication network between conventional wireless sensing devices is relatively small, and it is difficult to transmit and apply sensing data in a large scope. For another example, the conventional sensing technology has limitations in terms of connectivity, and an operator can provide connectivity only for sensing data transmission from UE. In addition, the conventional sensing technology is limited in a scope of sensing, for example, only for sensing of distance and angle.

In another aspect, separate communication and sensing needs to occupy a dedicated spectrum and/or hardware resource separately for communication and sensing, thereby causing a waste of resources. In addition, when a service that combines a communication service with a sensing service needs to be provided, a relatively high delay can also be caused by separate communication and sensing.

Converging communication and sensing can advantageously overcome the disadvantages of the foregoing separate communication and sensing. For example, integrated sensing and communication can enable sharing of air interface resources, thereby improving resource utilization. For another example, in the case of integrated sensing and communication, spectrum/resource management in the existing wireless communication system can be used to minimize interference between sensing devices. For still another example, extensive sensing can be performed via existing wireless communication networks (for example, cellular networks). In addition, the local wireless network can support communication between wireless sensing devices. Sensing devices are no longer limited to laser radars, millimeter wave radars, and Time of Flight (ToF) cameras that use conventional sensing technologies, and more devices can be enabled to participate in sensing and provide broader sensing services. For yet another example, in a case of integrated sensing and communication, a radio frequency module of the existing wireless communication system can be reused for sensing, thereby reducing costs. For still yet another example, in integrated sensing and communication, sensing is no longer separated from a service application, so as to easily access the service application program.

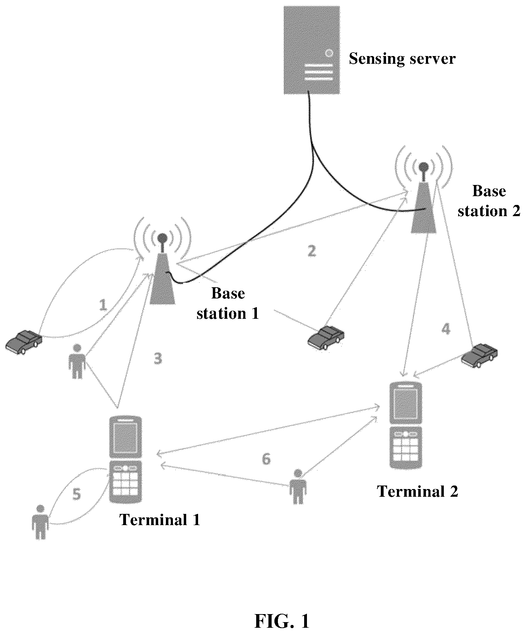

In the case of integrated sensing and communication, sensing can be performed between multiple entities. FIG. 1 schematically illustrates various sensing links in integrated sensing and communication. As shown in FIG. 1, for example, the sensing links can specifically include: (1) a base station echo sensing link: the base station transmits a sensing signal, and receives an echo signal resulting from at least reflection, refraction and/or diffraction of the sensing signal by an object such as a car; (2) inter-base station sensing link: a base station 2 (or a base station 1) receives a sensing signal sent by the base station 1 (or the corresponding base station 2); (3) uplink sensing link: the base station receives a sensing signal sent by the UE; (4) downlink sensing link: the UE receives a sensing signal sent by the base station; (5) echo sensing link of UE: the UE transmits a sensing signal and receives an echo signal resulting from at least reflection, refraction and/or diffraction of the sensing signal by an object such as a human; and (6) inter-UE sensing link: UE 2 (or UE 1) receives a sensing signal sent by UE 1 (or corresponding UE 2). In FIG. 1, each type of sensing link uses one transmit node and one receive node as an example. In an actual system, different sensing links can be selected based on different sensing requirements, each type of sensing link can have one or more transmit nodes and receive nodes, and an actual sensing system can include a variety of different types of sensing links. In addition, for the base station sensing link and the UE sensing link in FIG. 1, people and vehicles are used as examples of sensing objects, and actually, various sensing objects such as buildings, roadblocks, or animals can be present. More specifically, various sensing links can be used to sense media (for example, air) between the transmit node and the receive node.

FIG. 1 further illustrates a sensing server that can collect sensing-related data from the base station and process the data to obtain a sensing result. For example, the sensing server can be located in a core network in a wireless communication system. For example, the sensing server shown in FIG. 1 can alternatively serve as a location server described below, and can be, for example, an entity configured to provide a Location Management Function (LMF) in the core network.

Using the sensing links shown in FIG. 1, appropriate sensing can be performed on a specific object in various scenarios, for example, to determine presence of an obstacle, a location of a specific object, a moving speed of a specific object, and a humidity/particle concentration of air based on sensing results of various sensing objects.

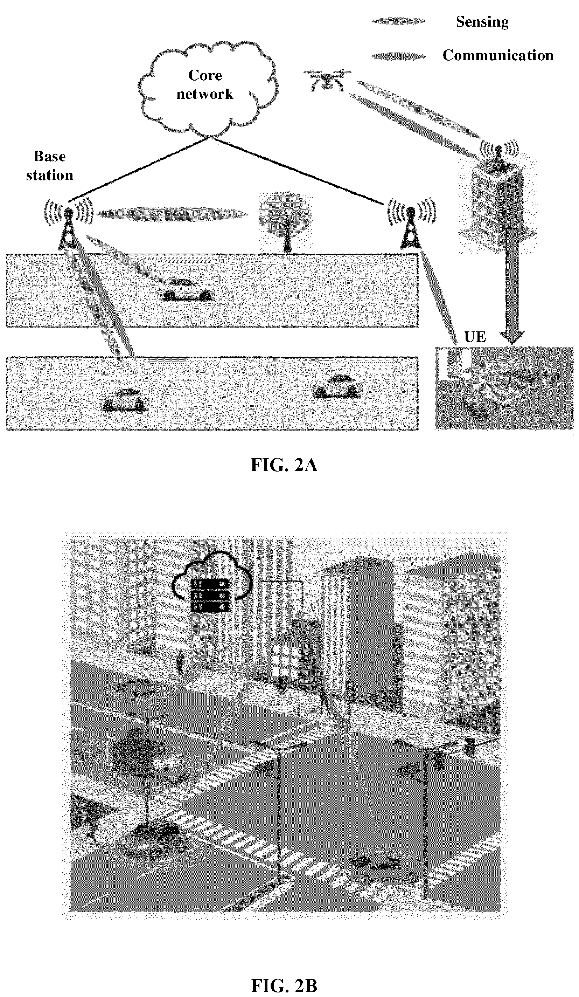

FIGs. 2A and 2B schematically illustrate exemplary scenarios and exemplary applications of integrated sensing and communication, respectively.

As shown in FIG. 2A, the base station can establish a communication link to some terminals (such as an in-vehicle terminal, an unmanned aerial vehicle, and a mobile phone denoted by using UE in the figure). In addition, a sensing link between the base station and the terminal (an in-vehicle terminal and an unmanned aerial vehicle shown in FIG. 2A), a sensing link between the base station and an obstacle (as shown in FIG. 2A, a tree), and a sensing link between the terminal and another object can also be present. In such a scenario, various applications can be implemented, such as unmanned aerial vehicle operation, autonomous driving, robot motion control, augmented reality, intelligent factories, intelligent logistics, and intelligent transportation.

FIG. 2B illustrates an exemplary application of intelligent transportation. For example, by using a sensing link between the base station and a terminal on a vehicle (for example, an in-vehicle terminal or a mobile communication device), the base station can sense a location, a speed, a moving direction and the like of the vehicle, thereby assisting in implementing functions such as traffic diversion and safety warning.

More specifically, the present disclosure mainly relates to a communication and sensing integration solution based on a base station echo sensing link using UE as a sensing object. In particular, in the present disclosure, the base station transmits a multiplexed signal multiplexing a communication signal and a sensing signal to UE, so that information related to positioning of the UE (for example, a distance between the base station and the UE, an angle between the base station and the UE, and/or a moving speed of the UE) can be sensed by using the sensing signal, so as to provide enhanced services (for example, adjusting a transmission frequency of the communication signal to improve resource utilization, providing more accurate and reliable positioning for the UE, and reducing power consumption) based on the information obtained through the sensing signal.

The following describes the solutions of the present disclosure in detail with reference to the accompanying drawings.

### Structure and operation procedure of base station according to embodiments

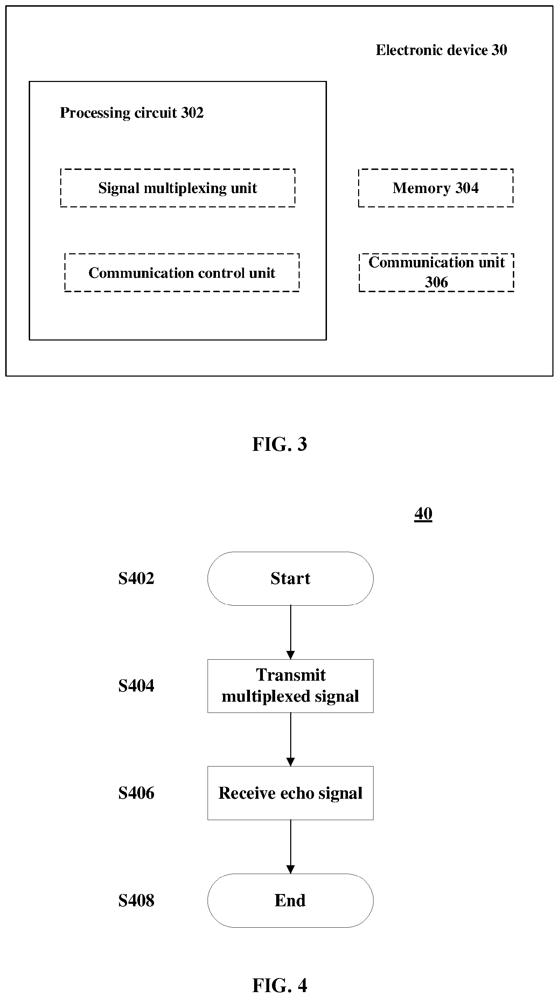

A conceptual structure of an electronic device 30 for a control device/base station according to the embodiments of the present disclosure is first described with reference to FIG. 3.

As shown in FIG. 3, the electronic device 30 can include a processing circuit 302. The processing circuit 302 is configured to: transmit a multiplexed signal to UE, where the multiplexed signal multiplexes a communication signal and a sensing signal, the sensing signal is at least used for sensing a distance between the UE and the electronic device 30, an angle between the UE and the electronic device 30, and/or a moving speed of the UE so as to determine a location of the UE; and receive an echo signal resulting from at least reflection, refraction and/or diffraction of the sensing signal by the UE.

The processing circuit 302 can be in a form of a general processor, or can be a dedicated processing circuit, such as an ASIC. For example, the processing circuit 302 can be formed by a circuit (hardware) or a central processing device (such as a central processing unit (CPU)). In addition, the processing circuit 302 can carry a program (software) used to make a circuit (hardware) or a central processing device work. The program can be stored in a memory (for example, arranged in the memory 304) or in an external storage medium connected from outside, and downloaded via a network (for example, the Internet).

In an implementation, the processing circuit 302 can include a signal multiplexing unit. The signal multiplexing unit can multiplex, by using an appropriate multiplexing method, a communication signal used for communication and a sensing signal used for sensing. For example, the communication signal and the sensing signal can be multiplexed by using a multiplexing method such as time division multiplexing, frequency division multiplexing, code division multiplexing, or space division multiplexing.

In an implementation, the processing circuit 302 can further include a communication control unit that controls communication with the UE (optionally via the communication unit 306) and that performs communication with the entity of the core network, if necessary. For example, the communication control unit can control to transmit to the UE a multiplexed signal multiplexing a communication signal and a sensing signal; control reception of an echo signal resulting from at least reflection, refraction and/or diffraction of the sensing signal by the UE; optionally, control to transmit control information to the UE (for example, including but not limited to information indicating how the communication signal and the sensing signal are multiplexed and indicating a transmission frequency of the positioning-related reference signal); and optionally, control to transmit information to the core network (for example, including but not limited to information indicating an echo signal and request information for requesting collaboration sensing).

Optionally, the electronic device 30 can further include a memory 304 and a communication unit 306 that are shown in dashed lines in the figure. In addition, the electronic device 30 can further include other components not shown, such as a radio frequency chain, a baseband processing unit, a network interface, a processor, and a controller. The processing circuit 302 can be associated with the memory 304 and/or the communication unit 306. For example, the processing circuit 302 can be connected directly or indirectly (for example, can be connected to another component in the middle) to the memory 304 for data access. For another example, the processing circuit 302 can be directly or indirectly connected to the communication unit 306, so as to transmit a radio signal via the communication unit 306 and receive a radio signal via the communication unit 306.

The memory 304 can store various types of information (for example, information about an echo signal received from the UE, information about a multiplexing method, and threshold information used for adjusting a transmission frequency of a positioning-related reference signal) generated by the processing circuit 302 or used for operations of the processing circuit 302, a program and data used for operations of the electronic device 30, data to be sent by the communication unit 306, and the like. The memory 304 is shown by a dashed line because it can alternatively be located in the processing circuit 302 or outside the electronic device 30. The memory 304 can be a volatile memory and/or a non-volatile memory. For example, the memory 304 can include but is not limited to a random access memory (RAM), a dynamic random access memory (DRAM), a static random access memory (SRAM), a read-only memory (ROM), and a flash memory.

The communication unit 306 can be configured to communicate with the terminal device under control of the processing circuit 302 (for example, the communication control unit). In an example, the communication unit 306 can be implemented as a transmitter or transceiver, including a communication component such as an antenna array and/or a radio frequency chain.

Although FIG. 3 shows that the processing circuit 302 is separated from the communication unit 306, the processing circuit 302 can be implemented as including the communication unit 306, for example, implemented in combination with the communication control unit. In addition, the processing circuit 302 can further be implemented as one or more other components in the electronic device 30, or the processing circuit 302 can be implemented as the electronic device 30 itself. In actual implementation, the processing circuit 302 can be implemented as a chip (such as an integrated circuit module including a single wafer), a hardware component, or a complete product.

It should be understood that the above various units are only logical modules divided based on logical functions to be implemented by the units, and are not intended to limit specific implementations, for example, the units can be implemented by software, hardware, or a combination of software and hardware. In actual implementation, the above various units can be implemented as independent physical entities, or can be implemented by a single entity (for example, a processor (CPU, DSP, or the like), or an integrated circuit). In addition, the foregoing units being shown in dashed lines in the accompanying drawings indicate that the units can not actually exist, and operations/functions implemented by the units can be implemented by the processing circuit itself.

The following describes in detail operations performed by the electronic device 30 serving as the base station with reference to the conceptual operation procedure 40 on the control device/base station side shown in FIG. 4.

The operations of the base station start from S402.

In S404, the base station transmits a multiplexed signal multiplexing a communication signal and a sensing signal to the UE. In particular, the base station can transmit the multiplexed signal by using beamforming, so that the multiplexed signal is transmitted in a manner pointing to a specific UE. Such manner is particularly advantageous for sensing of a specific UE by using the sensing signal in the multiplexed signal.

According to the present disclosure, the communication signal can be any signal used for wireless communication. In particular, the communication signal can include one or more of the following signals: a Positioning Reference Signal (PRS), a Demodulation Reference Signal (DMRS), a Channel State Information- Reference Signal (CSI-RS), a Sounding Reference Signal (SRS), and a communication data signal (where the PRS, DMRS, CSI-RS, and SRS can be used as reference signals related to positioning described below); and the sensing signal can be multiplexed with any one of the foregoing communication signals. According to the present disclosure, the sensing signal can be any appropriate signal at least for sensing a distance between the UE and the base station, an angle between the UE and the base station, and/or a moving speed of the UE, so as to determine a location of the UE. For example, the sensing signal can itself not carry information that needs to be interpreted by the sensing object (for example, UE), but is intended to be reflected, scattered, and/or diffracted by the sensing object to generate an echo signal, so as to determine a sensing result, for example, based on a difference between the sensing signal and the echo signal.

According to the present disclosure, the communication signal and the sensing signal can be multiplexed in any appropriate multiplexing manner. For example, the communication signal and the sensing signal can be multiplexed by using a multiplexing method such as time division multiplexing, frequency division multiplexing, code division multiplexing, or space division multiplexing. Preferably, the communication signal and the sensing signal can be multiplexed in units of symbols. Herein, "in units of symbols" can, for example, indicate that in one slot, some symbols are used for the communication signal and others are used for the sensing signal. Advantageously, such multiplexing manner features simple and easy implementation, and can reduce resource (such as a spectrum) overheads.

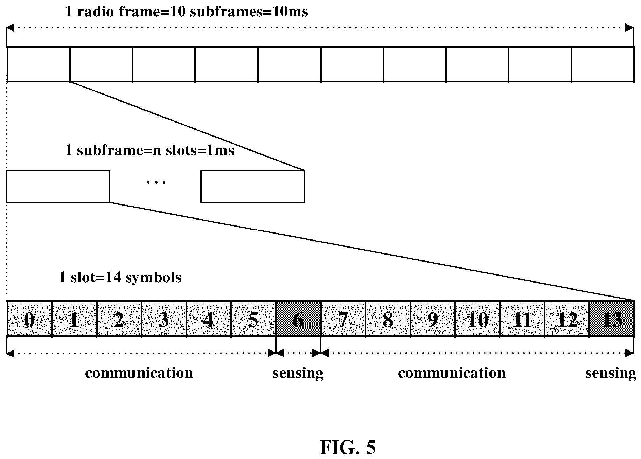

FIG. 5 illustrates an exemplary multiplexing method for multiplexing a communication signal and a sensing signal according to the present disclosure. As shown in FIG. 5, using 5G NR as an example, a duration of a radio frame is 10 ms, and the radio frame can include 10 subframes, each having a length of 1 ms. Depending on different subcarrier spacings, a subframe can include different quantities (for example, n) of slots, and each slot can include 14 symbols. According to the present disclosure, some symbols in a same slot can be used for the communication signal and others for the sensing signal. As shown in FIG. 5, symbols 0-5 and 7-12 in one slot can be used for communication, and symbols 6 and 13 can be used for sensing.

Although FIG. 5 illustrates a specific solution for dividing a slot into symbols, it should be understood that the present disclosure is not limited to this solution. For example, several consecutive symbols can be used for the sensing signal, for example, symbols 0-10 can be used for communication and symbols 11-13 can be used for sensing. For another example, the sensing signal can be arranged at non-uniform intervals in several positions of a slot, for example, symbols 0-2, 4-8, and 10-13 can be used for communication, and symbols 3 and 9 can be used for sensing. It should be understood that none of the foregoing solutions is limiting, and several symbols in one slot can be selected for the communication signal in any appropriate manner, and remaining symbols are used for the sensing signal. In addition, although a frame structure of 5G NR is used as an example in FIG. 5 to describe multiplexing of a sensing signal and a communication signal, the multiplexing method in the present disclosure can be applicable to any frame structure, provided that a symbol is used as a unit for time division multiplexing of a communication signal and a sensing signal.

According to the present disclosure, the multiplexing method for multiplexing a communication signal and a sensing signal can be pre-determined/prescribed (for example, a default multiplexing method specified in a related communication standard), or can be dynamically determined (for example, based on a required sensing signal transmission density determined dynamically). In the latter case, before step S404 shown in FIG. 4, the base station can further transmit, to the UE, multiplexing information indicating how the communication signal and the sensing signal are multiplexed. For example, the base station can transmit, to the UE, information indicating which multiplexing method is used, and in particular, in a case where time division multiplexing is performed in units of symbols, it can further indicate which symbols in a slot are used for the sensing signal.

Continue to refer to FIG. 4, as the base station transmits the multiplexed signal to the UE in S404, the sensing signal multiplexed in the multiplexed signal can be at least reflected, scattered, and/or diffracted by the UE. For ease of description in the present disclosure, signals resulting from at least reflection, scattering, and/or diffraction of the sensing signal by the UE are collectively referred to as echo signals. The term "echo signal" should be understood in a broad sense, that is, being any signal obtained after a signal wave of the sensing signal propagates to the base station through the UE and undergoes path loss caused by the UE.

In S406 in FIG. 4, the base station receives such echo signal. Communication and sensing can be integrated by sending the multiplexed signal multiplexing the communication signal and the sensing signal and receiving the echo signal of the sensing signal.

The conceptual operation procedure of the base station ends at S408.

It should be noted that the operation steps of the base station shown in FIG. 4 are merely exemplary. In practice, the operations of the base station can further include some additional or alternative steps. For example, as described above, before transmitting the multiplexed signal, the base station can further transmit, to the UE, multiplexing information indicating how the communication signal and the sensing signal are multiplexed. For another example, as described in detail below, after receiving the echo signal, the base station can further transmit, to the core network, information indicating the echo signal, and receive information indicating a sensing result from the core network.

The foregoing describes basic operations of the base station according to the present disclosure. It can be understood that communication and sensing can be integrated by multiplexing the communication signal and the sensing signal. Based on this, the base station can provide an enhanced service by using a sensing result according to situations. The following describes this in detail.

### Operations on base station side for first enhanced service according to the present disclosure

According to the first enhanced service of the present disclosure, the sensing signal can be used to for determining a moving speed of the UE, and the base station can dynamically adjust a transmission frequency of a reference signal related to positioning based on mobile communication positioning technology (hereinafter referred to as a reference signal related to positioning or a positioning-related reference signal) based on the moving speed of the UE determined by sensing, so as to provide higher positioning accuracy and reliability while improving resource utilization and reducing power consumption as much as possible. According to the present disclosure, the positioning-related reference signal can be a reference signal to be used when positioning the UE by using the mobile communication positioning technology. For example, the positioning-related reference signal can include one or more of the following reference signals: a positioning reference signal (PRS), a demodulation reference signal (DMRS), a channel state information reference signal (CSI-RS), and a sounding reference signal (SRS).

After receiving the echo signal of the sensing signal, the base station can, for example, transmit, to the core network, information indicating the echo signal, so that the core network can sense the UE, so as to obtain sensing results including one or more of, for example, a distance between the UE and the base station, an angle between the UE and the base station, a moving speed of the UE, and a location of the UE. For example, the information indicating the echo signal can include at least one or more of the following information: an amplitude of the echo signal, a phase of the echo signal, a frequency of the echo signal, a transmit time of the sensing signal, a receive time of the echo signal, and a time of flight from transmitting the sensing signal to receiving the echo signal.

According to the present disclosure, the sensing result can be determined based at least on a difference between the sensing signal and the echo signal. Such difference includes, for example, one or more of a doppler shift, a time of flight, a change of amplitude, a change of frequency, and a change of phase. A specific sensing principle is described in detail below with reference to operations of an electronic device of a core network.

It should be noted that although it is preferred in the present disclosure that the core network determines a sensing result; however, in some implementations, a distance, an angle, a moving speed, and/or a location of the UE can alternatively be sensed by the base station itself based on a similar sensing principle. In this case, the base station may not transmit, to the core network, information indicating the echo signal, but calculate a sensing result based on the difference between the sensing signal and the echo signal on its own.

According to the first enhanced service in the present disclosure, the base station can determine a magnitude relationship between the moving speed of the UE and at least one threshold based on the sensing result, and dynamically adjust, based on the determining, the transmission frequency of the positioning-related reference signal. As described above, the sensing result may directly include the moving speed of the UE, or may not explicitly include the moving speed of the UE but includes information indicating the location of the UE (for example, the distance between the UE and the base station, the angle between the UE and the base station, and/or the location of the UE). In the latter case, the base station can determine the moving speed of the UE based on a change amplitude between two sensing results (for example, a distance change amplitude and/or an angle change amplitude and/or a location change amplitude), or a change amplitude between the sensing result and a previously determined distance between the UE and the base station and/or angle between the UE and the base station and/or location of the UE.

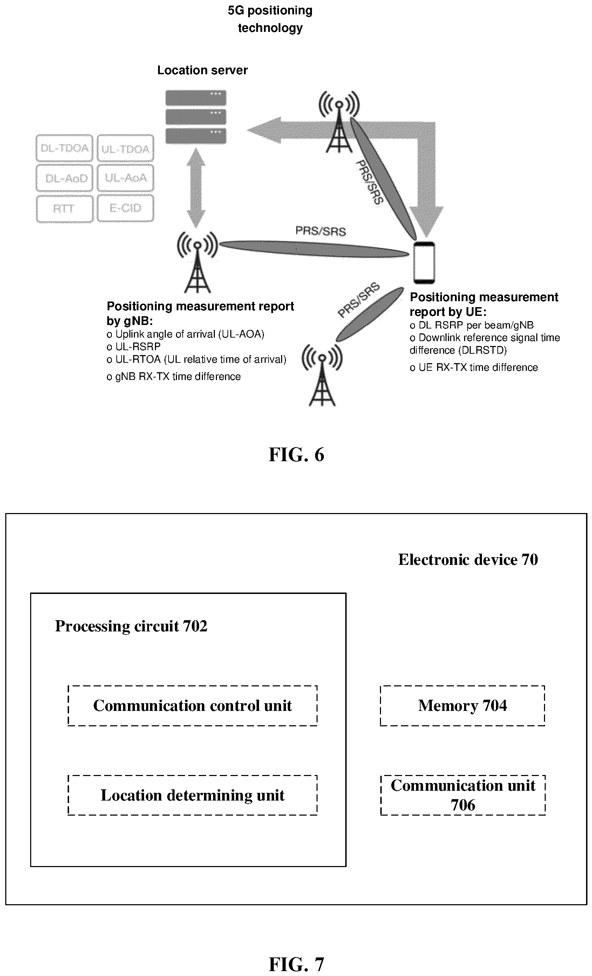

Specifically, the base station can decrease the transmission frequency of the positioning-related reference signal, in response to determining that the moving speed of the UE is less than or equal to a first threshold; maintain the transmission frequency of the positioning-related reference signal, in response to determining that the moving speed of the UE is higher than the first threshold and is lower than or equal to a second threshold; and in response to determining that the moving speed of the UE is higher than the second threshold, increase the transmission frequency of the positioning-related reference signal, and/or transmit request information to the core network to request one or more other base stations to cooperate to sense the UE (for example, to cooperatively determine the distance/angle between the UE and, the moving speed of the UE, and/or the location of the UE). Preferably, a base station for cooperative sensing can be one or more base stations that participate in positioning the UE based on a mobile communication positioning technology (for example, a mobile communication positioning technology described below with reference to FIG. 6). In this way, scheduling for participation in cooperative sensing can be easier, and accuracy of the sensing result can be improved. Alternatively, a base station for cooperative sensing can be selected by the core network based on reference signal receiving powers (RSRPs) of respective base stations. For example, one or more base stations with a maximum RSRP can be used as base stations for participating in cooperative sensing.

According to the present disclosure, the base station can determine specific values of the thresholds and an adjustment amplitude of the transmission frequency of the positioning-related reference signal according to an actual situation. The foregoing two thresholds are used as an example to describe a method for dynamically adjusting the transmission frequency of the positioning-related reference signal. However, this is not limited, and adjustment can be performed with a finer granularity or coarser granularity according to an actual requirement. For example, only one threshold can be set. When the moving speed of the UE is lower than the threshold, the transmission frequency of the positioning-related reference signal is dynamically decreased, and when the moving speed of the UE is higher than the threshold, the transmission frequency is dynamically increased. For another example, more thresholds can be set, and based on a threshold range in which the moving speed of the UE falls in, the base station can adjust the transmission frequency of the positioning-related reference signal with different adjustment amplitudes.

According to a specific implementation, increasing or decreasing the transmission frequency of the positioning-related reference signal can include shortening or prolonging the transmission period of the positioning-related reference signal. This is particularly applicable to a case where the positioning-related reference signal is periodically transmitted. For example, in a case where the base station determines to increase the transmission frequency of the positioning-related reference signal after determining a magnitude relationship between the moving speed of the UE and at least one threshold, the base station can transmit the positioning-related reference signal based on a shorter transmission period than before. Similarly, for example, in a case where the base station determines that the transmission frequency of the positioning-related reference signal needs to be decreased, the base station can transmit the positioning-related reference signal based on a longer transmission period than before.

According to a specific implementation, increasing or decreasing the transmission frequency of the positioning-related reference signal can include increasing or decreasing a symbol density occupied by the positioning-related reference signal. For example, in a case where the base station determines to increase the transmission frequency of the positioning-related reference signal, the positioning-related reference signal can be arranged in symbols of one frame in a higher density manner, so as to increase a quantity of symbols occupied by the positioning-related reference signal in one frame, which actually improves a frequency of transmitting the positioning-related reference signal in a predetermined time period (for example, a predetermined one or more frames). Similarly, in a case where the base station determines to decrease the transmission frequency of the positioning-related reference signal, for example, the positioning-related reference signal can be arranged in symbols of one frame in a lower density manner, which actually decreases a frequency of transmitting the positioning-related reference signal in a predetermined time period.

According to the present disclosure, when the base station determines that the transmission frequency of the positioning-related reference signal needs to be increased or decreased, the base station can transmit a message to the UE to notify the UE of the change. For example, the base station can notify the UE of a new transmission period of the positioning-related reference signal, or notify the UE of a new arrangement manner of the positioning-related reference signal in a frame.

The foregoing describes basic operations of the base station for providing the first enhanced service based on a sensing result according to the present disclosure. According to the present disclosure, the base station providing the first enhanced service can further perform some alternative or additional operations. The following provides descriptions.

According to an implementation, after obtaining a sensing result (for example, a sensing result obtained based on a sensing signal sent by a single base station (that is, the base station per se) when the UE moves at a low speed, or a cooperative sensing result obtained based on a sensing signals sent by multiple base stations when the UE moves at a high speed), the base station can further send the sensing result to the UE, so that the UE performs verification on the location of the UE indicated by the sensing result (for a specific verification operation, refer to the description of operations on a UE side in the following). Then, the base station can receive a verification result from the UE, and further dynamically adjust a transmission frequency of the positioning-related reference signal according to the verification result.

Specifically, the UE can autonomously determine a location of the UE, and send, to the base station, a difference between the location determined autonomously and the location determined based on the sensing result received from the base station as a verification result. For example, the base station can decrease or maintain the transmission frequency of the positioning-related reference signal in a case where a location difference indicated by the verification result is less than a predetermined threshold, and increase the transmission frequency of the positioning-related reference signal in a case where the location difference indicated by the verification result is greater than the predetermined threshold. Alternatively, the UE can compare a calculated location difference and the predetermined threshold, and feed back, to the base station when the location difference is less than the predetermined threshold, only information indicating to maintain a current transmission frequency of the positioning-related reference signal, and feed back a value of the location difference to the base station when the location difference is greater than the predetermined threshold, so that the base station dynamically increases the transmission frequency of the positioning-related reference signal according to the value of the difference. Advantageously, this implementation allows more appropriate adjustment of the transmission frequency of the positioning-related reference signals based on UE feedback.

According to an implementation, the base station can further dynamically adjust the transmission frequency of the positioning-related reference signal based on a positioning requirement of the UE. For example, the base station can first receive, from the UE, information indicating a positioning requirement. For example, the information indicating the positioning requirement can be information directly indicating what positioning accuracy requirement is required by the UE, or can be information indirectly indicating a positioning accuracy requirement of the UE, such as an application that the UE needs to start (for example, an application related to a navigation function can indicate a relatively high positioning accuracy requirement). Then, the base station can determine the positioning accuracy requirement of the UE based on the information indicating the positioning requirement received from the UE . Next, the base station can dynamically adjust the transmission frequency of the positioning-related reference signal based on the determined positioning accuracy requirement of the UE. For example, in response to determining that the UE has a low positioning accuracy requirement, the base station can maintain or decrease the transmission frequency of the positioning-related reference signal, and in response to determining that the UE has a high positioning accuracy requirement, increase the transmission frequency of the positioning-related reference signal, and/or transmit request information to an entity of the core network, so as to request one or more other base stations to cooperatively sensing a location of the UE. As described above, preferably, the base stations that perform cooperative sensing can be one or more base stations that participate in positioning the UE based on the mobile communication positioning technology.

It should be noted that the base station can dynamically adjust the transmission frequency of the positioning-related reference signal based on the sensing result alone, based on the positioning accuracy requirement of the UE alone, or based on both the sensing result and the positioning accuracy requirement of the UE. In any one of the three cases, the base station can further dynamically adjust the transmission frequency of the positioning-related reference signal based on UE feedback for the positioning result. In particular, in an implementation in which the base station dynamically adjusts the transmission frequency of the positioning-related reference signal based on both the sensing result and the positioning accuracy requirement of the UE, for example, the base station can first determine, based on the positioning accuracy requirement of the UE, one or more thresholds for dynamically adjusting the transmission frequency based on the moving speed, and then dynamically adjust, at any time, the transmission frequency of the positioning-related reference signal based on the sensed moving speed of the UE and based on the determined one or more thresholds.

### Operations on base station side for a second enhanced service according to the present disclosure

According to the second enhanced service of the present disclosure, a sensing signal can be used for determining a location of the UE, and the base station can jointly use both sensing-based positioning and positioning based on the mobile communication positioning technology to determine a location of the UE, so as to provide more reliable and accurate positioning.

In a conventional wireless communication system, the UE is located by using a mobile communication positioning technology. In the present disclosure, the mobile communication positioning technology is a technology conventionally used for positioning in the wireless communication system. For example, in 5G, the mobile communication positioning technology can include an Assisting-Global Navigation Satellite System (A-GNSS), a Downlink-Time Difference of Arrival (DL-TDOA), an Uplink-Time Difference of Arrival (UL-TDOA), a Downlink-Angle of Departure (DL-AoD), an Uplink-Angle of Arrival (UL-AoA), a Multi-Round Trip Time (Multi-RTT), a NR Enhanced Cell ID (E-CID), positioning based on a motion sensor such as a gyroscope, an accelerometer, a magnetometer, and the like.

FIG. 6 schematically illustrates some mobile communication positioning technologies used in 5G. As shown in FIG. 6, in these mobile communication positioning technologies, a positioning-related reference signal generally needs to be transmitted between a base station and a UE, and the base station/UE performs measurement on the received positioning-related reference signal and, when necessary, reports a measurement result to a location server located in a core network and/or receives assistance positioning data from the location server, so as to finally determine a location of the UE. In addition, in the mobile communication positioning technology shown in FIG. 6, a primary serving base station of the UE and one or more other base stations are generally required to locate the UE jointly. Table 1 below provides an overview of mobile positioning technologies commonly used in 5G.

**Table 1**

| Positioning method | Overview |
|---|---|
| A-GNSS | For A-GNSS, both the base station and the UE need to receive GNSS information. In A-GNSS, the base station can determine, based on an area in which the UE is currently located, a GNSS satellite above the area in which the UE is located, and provide such information to the UE, so that the UE can narrow a search range of the satellite, shorten a search time, more quickly complete a process of searching for an available satellite, and perform positioning by using the satellite. After obtaining the location of its own, the UE can transmit location information to the location server, and the location server calculates a more accurate location. |
| DL-TDOA | The UE receives a downlink positioning-related reference signal from, for example, multiple transmission and reception points (TRPs) that can involve multiple base stations, and uses assistance data received from the location server to measure a DL-Reference Signal Time Difference (DL-RSTD) (and optionally DL-RSRP). The location server can locate the UE based on the obtained measurement results for the multiple TRPs along with other configuration information. |
| UL-TDOA | For example, multiple TRPs that can involve multiple base stations can receive an uplink positioning-related reference signal from the UE, and uses assistance data received from the location server to measure a received UL-Relative Time of Arrival (UL-RTOA) (and optionally, UL-RSRP). The obtained measurement result can be used along with other configuration information to estimate a location of the UE. |
| DL-AoD | The UE receives a downlink positioning-related reference signal, for example, from multiple TRPs that can involve multiple base stations, and uses assistance data received from the location server to measure a DL-RSRP of the received signal. The location server can locate the UE based on the obtained measurement results for the multiple TRPs along with other configuration information. |
| UL-AOA | For example, multiple TRPs that can involve multiple base stations can receive an uplink positioning-related reference signal from the UE, and uses assistance data received from the location server to measure an azimuth angle of arrival (Azimuth-AoA, A-AoA) and a zenith angle of arrival (Zenith-AoA, Z-AoA) of the received signal. The obtained measurement result can be used along with other configuration information to estimate a location of the UE. |
| Multi-RTT | The UE can receive a downlink positioning-related reference signal, for example, from multiple TRPs that can involve multiple base stations, and the multiple TRPs receives an uplink positioning-related reference signal from the UE. The UE uses assistance data received from the location server to measure a receive-transmit (Rx-Tx) time difference (and optionally DL- RSRP) of the UE, and the TRP uses assistance data received from the location server to measure an Rx-Tx time difference (and optional UL-RSRP) of the gNB. The measurement result is reported to the location server and is used for determining an RTT at the location server, where the RTT is used for estimating a location of the UE. |
| E-CID | Additional UE measurements and/or gNB measurements are used to improve a technology of UE location estimation. |
| Motion sensor-based positioning | The UE calculates a displacement of the UE by using a motion sensor such as an accelerometer, a gyroscope, and a magnetometer. The UE estimates a relative displacement based on a reference location and/or a reference time. The UE can transmit, to the location server, a report including a determined relative displacement, where the relative displacement can be used for determining an absolute position of the UE. |

With development of various industries, various applications with high requirements for positioning reliability and accuracy emerge, such as Internet of vehicles, automatic driving, intelligent manufacturing, intelligent logistics, unmanned aerial vehicles, and asset tracing. It can be difficult to meet positioning reliability and accuracy requirements in these application scenarios by using only existing mobile communication positioning technologies. By using the integrated sensing and communication solution of the present disclosure, sensing-based positioning is integrated with the conventional positioning technology, which can provide more reliable and accurate positioning.

According to the second enhanced service of the present disclosure, the base station can, on the one hand, obtain a first location, based on the mobile communication positioning technologies(for example, one or more of A-GNSS, DL-TDOA, UL-TDOA, DL-AoD, UL-AoA, Multi - RTT, NR E-CID, and motion sensor-based positioning described above), of the UE (that is, a location based on mobile communication positioning); on the other hand, can determine a second location (that is, a sensing-based location) of the UE based on a sensing result; and then weights the first location and the second location separately to finally determine a location of the UE.

For example, the base station can determine the first location of the UE based on the mobile communication positioning technology, or can receive, from the core network (for example, the location server), information indicating the first location of the UE.

As described in the foregoing description of the first enhanced service, for example, the base station can transmit, to the core network, information indicating an echo signal of the sensing signal, so that the core network calculates a sensing result for the UE, so as to obtain one or more of, for example, a distance between the UE and the base station, an angle between the UE and the base station, a moving speed of the UE, and a location of the UE. The base station can determine the second location of the UE based on the sensing result received from the core network. For example, when the sensing result does not directly indicate the location of the UE, but indicates the distance between the UE and the base station, the angle between the UE and the base station, and/or the moving speed of the UE, the base station can determine the second location of the UE based on the distance, the angle, and/or the speed information of the UE, the location of the UE that is determined last time, and any other available assistance information.

According to the present disclosure, the base station can determine, by using any appropriate method, weights to be applied to the first location and the second location. For example, in a case where the communication signal and the sensing signal are time-division multiplexed, weights of the first location and the second location can be determined based on a ratio of a quantity of symbols occupied by the communication signal to a quantity of symbols occupied by the sensing signal in a predetermined period. For example, the predetermined time period can be one slot. For another example, the base station can further assign a weight based on accuracy of the first location and the second location. For example, the base station can monitor, based on the feedback information of the UE on the location, respective accuracy of mobile communication positioning and sensing-based positioning in a period of time, and assign a relatively high weight to a location determined in the positioning manner with relatively high accuracy. According to the present disclosure, the weights assigned to the first location and the second location can be dynamically adjusted based on actual situations (for example, the accuracy of the multiplexing method and/or the two positioning manners used). In addition, in some cases (for example, the accuracy of the positioning result obtained in one positioning manner is very low), even a zero value can be assigned as a weight of a positioning result obtained in the one positioning manner.

The foregoing describes two types of enhanced services according to the present disclosure. In fact, the two enhanced services can alternatively be implemented together. For example, the base station can dynamically adjust a transmission frequency of a positioning-related reference signal based on a sensed moving speed of the UE and/or a positioning requirement of the UE. Meanwhile, the base station can determine a first location of the UE by using an appropriate mobile communication positioning method based on the positioning-related reference signal, determine a second location of the UE by using a sensing result, and weight the first location and the second location to determine a location of the UE. Further, optionally, the base station can also feed back, to the UE, a location obtained by means of weighted calculation (that is, a location obtained by performing joint positioning by using a sensing technology and a mobile communication positioning technology), and adjust a transmission frequency of the positioning-related reference signal based on further feedback on the location from the UE.

Structure and operation procedure of UE according to the present disclosure

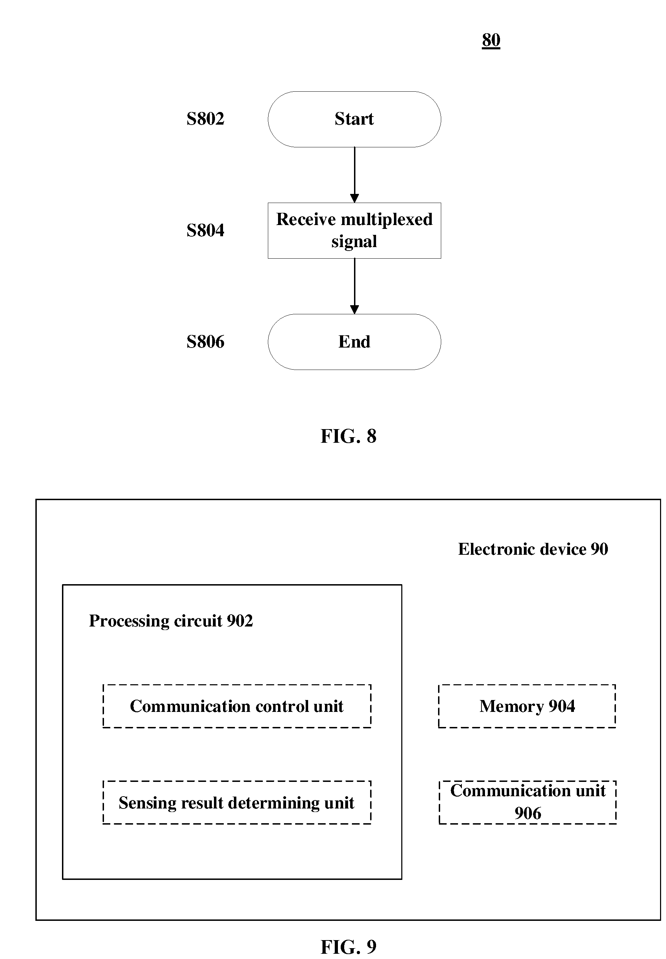

The foregoing describes in detail the exemplary structure and exemplary operations of the base station according to the present disclosure. The following describes an exemplary structure and an exemplary operation procedure of a terminal device according to the present disclosure with reference to FIG. 7 and FIG. 8.

A conceptual structure of an electronic device 70 for a terminal device/UE according to the embodiments of the present disclosure is first described with reference to FIG. 7.

As shown in FIG. 7, the electronic device 70 can include a processing circuit 702. The processing circuit 702 can be configured to receive a multiplexed signal from a base station, where the multiplexed signal multiplexes a communication signal and a sensing signal, where an echo signal resulting from at least reflection, refraction and/or diffraction of the sensing signal by the electronic device 70 is transmitted to at least one or more base stations that include the base station, and where the sensing signal is at least used for sensing a distance between the electronic device 70 and the base station, an angle between the electronic device 70 and the base station, and/or a moving speed of the electronic device 70 so as to determine a location of the electronic device 70.

The processing circuit 702 can be in a form of a general processor, or can be a dedicated processing circuit, such as an ASIC. For example, the processing circuit 702 can be formed by a circuit (hardware) or a central processing device (such as a central processing unit (CPU)). In addition, the processing circuit 702 can carry a program (software) used to make a circuit (hardware) or a central processing device work. The program can be stored in a memory (for example, arranged in the memory 704) or in an external storage medium connected from outside, and downloaded via a network (for example, the Internet).

In an implementation, the processing circuit 702 can include a communication control unit that controls communication with the base station (optionally, by using the communication unit 706). The communication control unit can control, for example, to receive a multiplexed signal multiplexing a communication signal and a sensing signal from the base station; and optionally, control to receive control information from the base station (for example, including but not limited to information indicating how the communication signal and the sensing signal are multiplexed and indicating a transmission frequency of a positioning-related reference signal); and optionally, transmit information indicating a positioning requirement to the base station, and the like.

In an optional implementation, the processing circuit 702 can further include a location determining unit. The location determining unit can autonomously determine a location of the electronic device 70 by using an applicable positioning technology. The location determining unit can further compare an autonomously determined location with a location indicated in the information received from the base station, determine a location difference between the two, and perform feedback to the base station based on the location difference, so that the base station dynamically adjusts the transmission frequency of the positioning-related reference signal based on the feedback of the electronic device 70.

In addition, optionally, the electronic device 70 can further include a memory 704 and a communications unit 706 that are shown by dotted lines in the figure. In addition, the electronic device 70 can further include other components not shown, such as a radio frequency chain, a baseband processing unit, a network interface, a processor, and a controller. The processing circuit 702 can be associated with the memory 704 and/or the communication unit 706. For example, the processing circuit 702 can be connected directly or indirectly (for example, can be connected to another component in the middle) to the memory 704 for data access. For another example, the processing circuit 702 can be directly or indirectly connected to the communication unit 706, so as to transmit a radio signal via the communication unit 706 and receive a radio signal via the communication unit 706.

The memory 704 can store various information generated by the processing circuit 702 or used for operations of the processing circuit 702 (for example, information about a positioning requirement of the electronic device 702, information about a multiplexing method, information about a transmission frequency of a positioning-related reference signal, data used for autonomous positioning, and the like), a program and data that are used for operations of the electronic device 70, and data to be transmitted by the communication unit 706. The memory 704 is shown in a dashed line because it can alternatively be located in the processing circuit 702 or outside the electronic device 70. The memory 704 can be a volatile memory and/or a non-volatile memory. For example, the memory 704 can include but is not limited to a random access memory (RAM), a dynamic random access memory (DRAM), a static random access memory (SRAM), a read-only memory (ROM), and a flash memory.

The communication unit 706 can be configured to communicate with a base station under control of the processing circuit 702 (for example, a communication control unit). In an example, the communication unit 706 can be implemented as a transmitter or transceiver, including a communication component such as an antenna array and/or a radio frequency chain.

Although FIG. 7 shows that the processing circuit 702 is separated from the communication unit 706, the processing circuit 702 can alternatively be implemented as including the communication unit 706. In addition, the processing circuit 702 can further be implemented as one or more other components in the electronic device 70, or the processing circuit 702 can be implemented as the electronic device 70 itself. In actual implementation, the processing circuit 702 can be implemented as a chip (such as an integrated circuit module including a single wafer), a hardware component, or a complete product.

It should be understood that the above various units are only logical modules divided based on logical functions to be implemented by the units, and are not intended to limit specific implementations, for example, the units can be implemented by software, hardware, or a combination of software and hardware. In actual implementation, the above various units can be implemented as independent physical entities, or can be implemented by a single entity (for example, a processor (CPU, DSP, or the like), or an integrated circuit). In addition, the foregoing units being shown in dashed lines in the accompanying drawings indicate that the units can not actually exist, and operations/functions implemented by the units can be implemented by the processing circuit itself.

The following describes a conceptual operation procedure 80 of the electronic device 70 on the terminal device/UE side with reference to FIG. 8.

The operations of the UE start from S802.

In S804, the UE receives a multiplexed signal multiplexing a communication signal and a sensing signal from the base station. As described above, the multiplexed signal can be a signal multiplexed in any appropriate multiplexing manner. As described above, the multiplexing method for multiplexing a communication signal and a sensing signal can be pre-determined/prescribed (for example, a default multiplexing method specified in a related communication standard), or can be dynamically determined (for example, based on a required sensing signal transmission density determined dynamically). In the former case, the UE can demultiplex the communication signal and the sensing signal directly by using the predetermined/prescibed multiplexing method. In the latter case, the UE can receive, from the base station in advance (for example, before S804), information indicating a multiplexing method.

As the UE receives the multiplexed signal from the base station, the sensing signal in the multiplexed signal can be naturally at least reflected, scattered, and/or diffracted by the UE. An echo signal resulting from at least reflection, scattering, and/or diffraction of the sensing signal by the UE can be propagated to one or more base stations including the base station that transmits the multiplexed signal, so that the one or more base stations can sense the UE, in particular, a distance between the UE and the base station, an angle between the UE and the base station, and/or a moving speed of the UE, so as to determine a location of the UE. It should be noted that the reflection, scattering, and/or diffraction of the sensing signal by the UE is physically natural, that is, being transparent to the UE. According to some embodiments of the present disclosure, the UE does not need to perform reception and analysis operations on the sensing signal. However, in a case where the UE has a capability of analyzing the sensing signal, the UE can alternatively analyze the received sensing signal to determine a sensing result autonomously and/or assist in such determination. In addition, the multiplexed signal is actually reflected, scattered, and/or diffracted by the UE as a whole. However, the base station focuses only on changes of the sensing signal generated after the sensing signal being reflected, scattered, and/or diffracted, so as to sense the UE based on the changes.

The conceptual operation procedure of the UE ends at S806.

It should be noted that the operation steps of the UE shown in FIG. 8 are merely exemplary. In practice, the operations of the UE can further include some additional or alternative steps. For example, as described above, before receiving the multiplexed signal, the UE can further receive, from the base station, multiplexing information indicating how the communication signal and the sensing signal are multiplexed.

The foregoing describes basic operations of the UE according to the present disclosure. It can be understood that communication and sensing can be integrated by multiplexing a communication signal and a sensing signal. As described in detail above, the present disclosure further provides an enhanced service based on integrated sensing and communication. Technical concepts and features of these enhanced services have been described above by referring to operations on the base station side, and the following describes specific operations on the UE side for these enhanced services.

As described above, according to the first enhanced service of the present disclosure, the sensing signal can be used for determining a moving speed of the UE, and the base station can dynamically adjust, based on the moving speed of the UE determined by means of sensing, a transmission frequency of a reference signal related to positioning based on a mobile communication positioning technology. In the first enhanced service, the UE can receive, from the base station, information indicating the transmission frequency of the positioning-related reference signal. In particular, as described in detail above, the transmission frequency of the positioning-related reference signal can be dynamically adjusted based on one or both of the following: a sensing result of the moving speed of the UE based on the sensing signal; and a positioning accuracy requirement. In the latter case, the UE can transmit information indicating a positioning requirement of the UE to the base station in advance, so that the base station determines the positioning accuracy requirement of the UE based on the information. For example, the information indicating the positioning requirement can be information directly indicating what positioning accuracy requirement is required by the UE, such as a specific accuracy requirement parameter or an accuracy requirement level. Alternatively, the information indicating the positioning requirement can be information indirectly indicating the positioning accuracy requirement, such as an application that the UE needs to start.

As described above, in the first enhanced service according to the present disclosure and the second enhanced service according to the present disclosure, the UE can receive, from the base station, information indicating a location of the UE, perform verification on the location, and feed back a verification result to the base station, so that the base station further adjusts the transmission frequency of the positioning-related reference signal.

Specifically, the information that is received by the UE from the base station and that indicates the location of the UE can include a sensing result based on the sensing signal or a joint positioning result. Herein, as described above, the sensing result can include the sensed distance between the UE and the base station, angle between the UE and the base station, moving speed of the UE, and/or location of the UE. The joint positioning result can include a location of the UE that is determined according to the first location of the UE based on the mobile communication positioning technology and the second location based on the sensing result, as described in detail above. In particular, in a case where the sensing result itself does not directly include the location of the UE, the UE can determine the location based on the sensing result by using the distance, location, and/or moving speed information included in the sensing result and any other applicable information through any applicable method.

After receiving the information indicating the location of the UE from the base station, the UE can autonomously determine the location of the UE without using the information. The UE can select any applicable positioning method (for example, that supported by the UE) to determine its location independently of the location information received from the base station. For example, the UE can include one or more estimated UE locations based on the following information: location information obtained based on a RAT-only-DL positioning technology, location information based on a A-GNSS, location information based on a Global Positioning System (GPS), a previous positioning result, and movement information of the UE determined based on a motion sensor.

After determining the location of the UE autonomously, the UE can determine a difference between the autonomously determined location and the location indicated in the information received from the base station, and feed back the difference to the base station. For example, the UE can feed back to the base station the difference itself as a verification result for the location indicated in the information received from the base station, so that the base station dynamically adjusts a transmission frequency of the positioning-related reference signal based on a value relationship between the location difference and a predetermined threshold. Alternatively, the UE can compare a calculated location difference and the predetermined threshold, and feed back, to the base station when the location difference is less than the predetermined threshold, information indicating to maintain a current transmission frequency of the positioning-related reference signal, and feed back a value of the location difference to the base station when the location difference is greater than the predetermined threshold, so that the base station dynamically increases the transmission frequency of the positioning-related reference signal according to the value of the difference.

### Structure and operation procedure of electronic device on core network side according to the present disclosure

The foregoing describes in detail the exemplary structure and exemplary operations of the base station and the UE according to the present disclosure. The following describes an exemplary structure and an exemplary operation procedure of an electronic device on the core network side according to the present disclosure with reference to FIG. 9 to FIG. 11.

A conceptual structure of an electronic device 90 on the core network side according to the embodiments of the present disclosure is first described with reference to FIG. 9. The electronic device 90 on the core network side according to the present disclosure can be an electronic device that provides both a positioning service and a sensing service. For example, the electronic device 90 can be used for, for example, the afore-mentioned location server or sensing server. In particular, the electronic device 90 can be an entity for providing a location management function (LMF).

As shown in FIG. 9, the electronic device 90 can include a processing circuit 902. The processing circuit 902 can be configured to receive, from a base station, information indicating an echo signal resulting from at least reflection, refraction and/or diffraction of the sensing signal by UE; determine a sensing result for the UE based at least on a difference between the sensing signal and the echo signal, where the sensing result includes a distance between the UE and the base station, an angle between the UE and the base station, a moving speed of the UE, and/or a location of the UE; and transmit the sensing result to the base station.

The processing circuit 902 can be in a form of a general processor, or can be a dedicated processing circuit, such as an ASIC. For example, the processing circuit 902 can be formed by a circuit (hardware) or a central processing device (such as a central processing unit (CPU)). In addition, the processing circuit 902 can carry a program (software) used to make a circuit (hardware) or a central processing device work. The program can be stored in a memory (for example, arranged in the memory 904) or in an external storage medium connected from outside, and downloaded via a network (for example, the Internet).

In an implementation, the processing circuit 902 can include a communication control unit that controls communication with the base station (optionally, via the communication unit 906). The communication control unit can, for example, control to receive from the base station information indicating an amplitude, a frequency, and/or a phase of the echo signal resulting from at least reflection, refraction and/or diffraction of the sensing signal by the UE; control to transmit a sensing result for the UE to the base station; and optionally, receive from the base station request information for requesting one or more other base stations to cooperatively sense a location of the UE, and the like.

In an implementation, the processing circuit 902 can further include a sensing result determining unit. The sensing result determining unit can determine a sensing result for the UE based at least on a difference between the sensing signal and the echo signal (for example, one or more of a doppler shift, a time of flight, a change of amplitude, a change of frequency, and a change of phase). As described above, the sensing result includes the distance between the UE and the base station, the angle between the UE and the base station, the moving speed of the UE, and/or the location of the UE.

In addition, optionally, the electronic device 90 can further include a memory 904 and a communications unit 906 that are shown in dotted lines in the figure. In addition, the electronic device 90 can further include other components not shown, such as a network interface, a processor, and a controller. The processing circuit 902 can be associated with the memory 904 and/or the communication unit 906. For example, the processing circuit 902 can be connected directly or indirectly (for example, can be connected to another component in the middle) to the memory 904 for data access. For another example, the processing circuit 902 can be directly or indirectly connected to the communication unit 906, so as to transmit a signal via the communication unit 906 and receive a signal via the communication unit 906.

The memory 904 can store various types of information generated by the processing circuit 902 or used for operations of the processing circuit 902 (for example, information about the sensing signal and the echo signal), a program and data that are used for operations of the electronic device 90, and data to be transmitted by the communication unit 906. The memory 904 is shown in a dashed line because it can alternatively be located in the processing circuit 902 or outside the electronic device 90. The memory 904 can be a volatile memory and/or a non-volatile memory. For example, the memory 904 can include but is not limited to a random access memory (RAM), a dynamic random access memory (DRAM), a static random access memory (SRAM), a read-only memory (ROM), and a flash memory.

The communication unit 906 can be configured to communicate with the base station under control of the processing circuit 902 (for example, a communication control unit). In an example, the communication unit 906 can be implemented as a communication component that performs wired communication by using a cable such as an optical fiber. In an example, the communication unit 906 can alternatively include a communication component applicable for wireless communication.

Although FIG. 9 shows that the processing circuit 902 is separated from the communication unit 906, the processing circuit 902 can alternatively be implemented as including the communication unit 906. In addition, the processing circuit 902 can further be implemented as one or more other components in the electronic device 90, or the processing circuit 902 can be implemented as the electronic device 90 per se. In actual implementation, the processing circuit 902 can be implemented as a chip (such as an integrated circuit module including a single wafer), a hardware component, or a complete product.

It should be understood that the above various units are only logical modules divided based on logical functions to be implemented by the units, and are not intended to limit specific implementations, for example, the units can be implemented by software, hardware, or a combination of software and hardware. In actual implementation, the above various units can be implemented as independent physical entities, or can be implemented by a single entity (for example, a processor (CPU, DSP, or the like), or an integrated circuit). In addition, the foregoing units being shown in dashed lines in the accompanying drawings indicate that the units can not actually exist, and operations/functions implemented by the units can be implemented by the processing circuit itself.

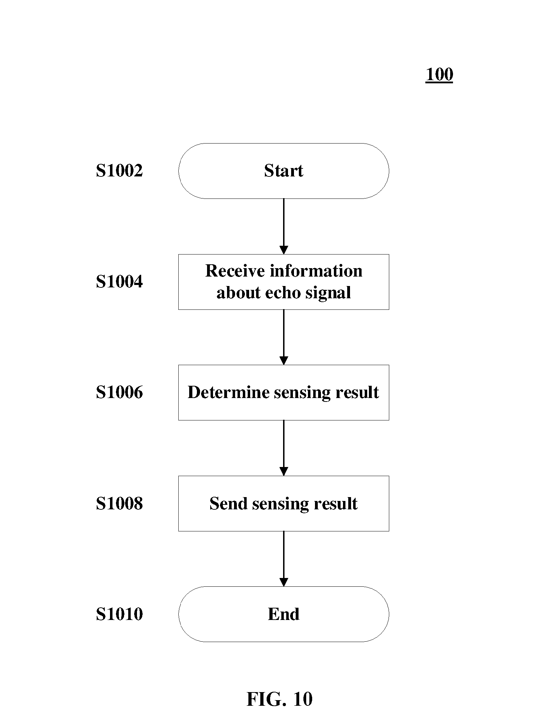

The following describes a conceptual operation procedure 100 of the electronic device 90 on the core network side with reference to FIG. 10.

The operations of the electronic device on the core network side start from S1002.

In S1004, the electronic device on the core network side receives, from the base station, information about an echo signal resulting from at least reflection, refraction and/or diffraction of the sensing signal by the UE, so as to calculate a sensing result based on the information. For example, such information can include at least one or more of the following information: an amplitude of the echo signal, a phase of the echo signal, a frequency of the echo signal, a transmit time of the sensing signal, a receive time of the echo signal, and a time of flight from transmitting the sensing signal to receiving the echo signal of the sensing signal by the base station. According to an implementation, it can be pre-determined and known to the core network what amplitude, frequency, phase, signal type, pattern, and/or sequence to be used by the base station for transmitting a sensing signal. In this situation, the base station merely needs to transmit information of the echo signal to the electronic device on the core network side. According to another implementation, the electronic device on the core network side can alternatively receive, in advance (for example, before S1004 or in S1004), from the base station information indicating the sensing signal per se, such as information indicating the amplitude, frequency, phase, signal type, pattern, and/or sequence of the sensing signal.

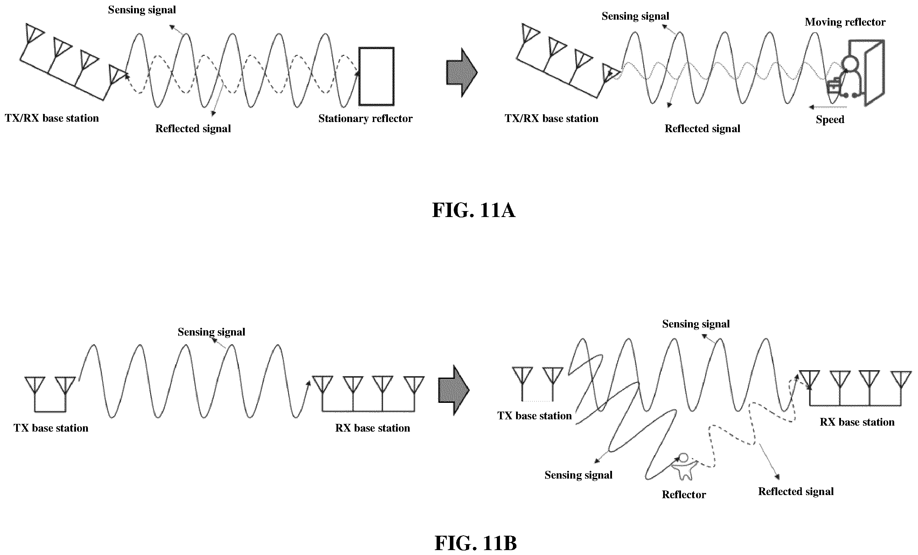

Subsequently, in S1006, the electronic device on the core network side can determine a sensing result for the UE based at least on a difference between the sensing signal and the echo signal. According to the present disclosure, such difference can include, for example, one or more of a doppler shift, a time of flight, a change of amplitude, a change of frequency, and a change of phase. FIGs. 11A and 11B illustrate the basic principles of sensing.

FIG. 11A illustrates an exemplary principle of participation in sensing by a single base station. In a case where the single base station participates in sensing (for example, when the UE moves at a relatively low speed or the UE has a relatively low positioning accuracy requirement as described above), the base station can serve as both a transmit end of the sensing signal and a receive end of the echo signal of the sensing signal. When the base station transmits the sensing signal to the UE acting as a reflector, the sensing signal is at least reflected, scattered, and/or diffracted by the UE, and is propagated back to the base station as an echo signal. After at least reflection, scattering, and/or diffraction by the UE, the amplitude, phase, and/or frequency of the echo signal can be different from that of the original sensing signal. For example, a distance and an angle between the base station and the UE can be determined based on changes of the amplitude, phase, and/or frequency between the sensing signal and the echo signal in combination with the time of flight. In particular, when the UE moves at a specific speed, a doppler shift is further present between the sensing signal and the echo signal. Based on the amplitude, phase, frequency, and time of flight, in combination with the doppler shift, a moving speed of the UE can be further determined.

In the situation shown in FIG. 11A, the base station can transmit information related to the received echo signal to the electronic device on the core network side, and the electronic device on the core network side calculates a distance, an angle, and/or a moving speed of the UE based on the principle shown in FIG. 11A. In addition, the electronic device on the core network side can further calculate a location of the UE by optionally referring to any other available information (for example, a location of the base station that transmits the sensing signal and a stored previous location of the UE) based on information about a sensed distance, angle, and/or moving speed.

FIG. 11B illustrates an exemplary principle of participation in sensing by multiple base stations. In a situation where the multiple base stations participates in sensing (for example, when the UE moves at a relatively high speed or the UE has a relatively high positioning accuracy requirement as described above), one base station can serve as a transmit end of the sensing signal, and one or more other base stations can serve as a receive end of the echo signal. As shown in FIG. 11B, when the transmit end base station transmits the sensing signal to the UE acting as a reflector, the sensing signal is at least reflected, scattered, and/or diffracted by the UE, and can be propagated back to the receive end base station as an echo signal. As illustrated with reference to FIG. 11A, after at least reflection, scattering, and/or diffraction by the UE, an amplitude, phase, and/or frequency of the echo signal can be different from that of the original sensing signal, and a doppler shift is also present between the sensing signal and the echo signal. For example, a distance and an angle between the receive end base station and the UE and a moving speed of the UE can be determined based on a time of flight, a change of amplitude, a change of phase, a change of frequency, and/or the doppler shift.

It should be noted that, in the situation of FIG. 11B, although not shown in the figure, the sensing signal being at least reflected, scattered, and/or diffracted by the UE can alternatively be propagated as an echo signal to the transmit end base station. This is similar to the principle of FIG. 11A. The transmit end base station can alternatively transmit information about the received echo signal to the electronic device on the core network side, so as to calculate a sensing result.

Although FIG. 11B shows only two base stations, more than two base stations can cooperate to sense the UE. In this situation, a sensing signal transmitted by one base station can be at least reflected, scattered, and/or diffracted by the UE, and can be propagated as an echo signal to multiple receive end base stations. Each receive end base station that participates in cooperative sensing can transmit information indicating an echo signal received by the base station per se to a device on the core network side. In addition, in a case where multiple base stations cooperate to sense the UE, each base station can transmit a sensing signal of the base station to the UE. The device on the core network side can calculate a sensing result based on at least the following information: information, transmitted from each base station, that is about an echo signal of a sensing signal transmitted by the base station per se to the UE, and information, transmitted from each base station, that is about an echo signal of a sensing signal transmitted by one or more other base stations to the UE.

Referring to FIG. 10, after determining a sensing result for the UE, the electronic device on the core network side can transmit the sensing result to the base station in S1008.

The conceptual operation procedure of the electronic device on the core network side ends at S1010.

It should be noted that the operation steps of the electronic device on the core network side shown in FIG. 10 are merely exemplary. In practice, the operations of the electronic device on the core network side can further include some additional or alternative steps. For example, the electronic device on the core network side can further receive, from a base station, request information for requesting one or more other base stations to cooperatively sense a location of the UE, and in response to the request, transmit to one or more base stations information indicating participation in cooperative sensing. Preferably, the electronic device on the core network side can schedule one or more base stations that participate in positioning the UE based on the mobile communication positioning technology to perform cooperative sensing. As described above, the mobile communication positioning technology can include, for example, DL-TDOA, UL-TDOA, DL-AoD, UL-AoA, Multi-RTT, and ID NR E-CID. Preferably, the electronic device on the core network side can transmit information indicating participation in cooperative sensing to one or more base stations that participate in positioning the UE based on the mobile communication positioning technology. Subsequently, the electronic device can receive information indicating one or more echo signals from respective base stations, as described with reference to FIG. 11B, and sense a location of the UE based on both the received information and any other available information.

The foregoing has described basic operations of the electronic device on the core network side according to the present disclosure. It should be understood that in the present disclosure, the electronic device on the core network side preferably performs sensing-related calculation. However, this is not limited, and this calculation can be performed by the base station.

### Interaction between base station, UE and core network

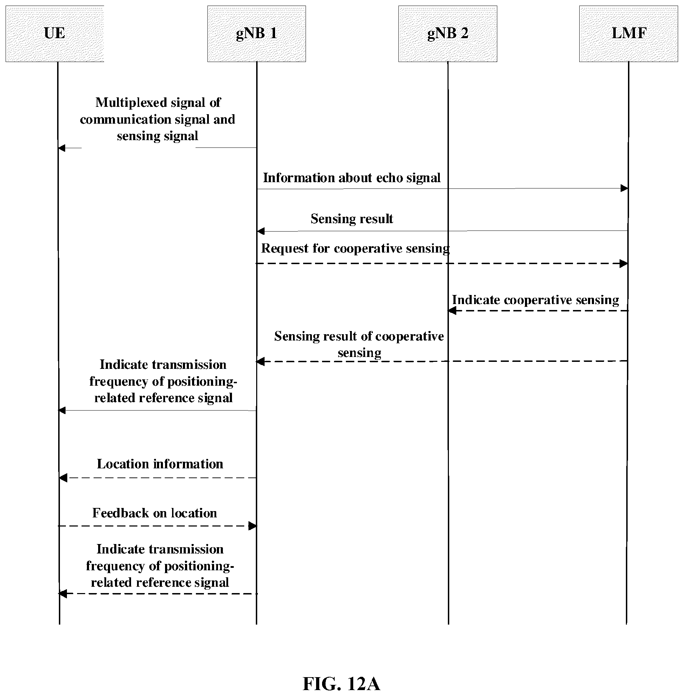

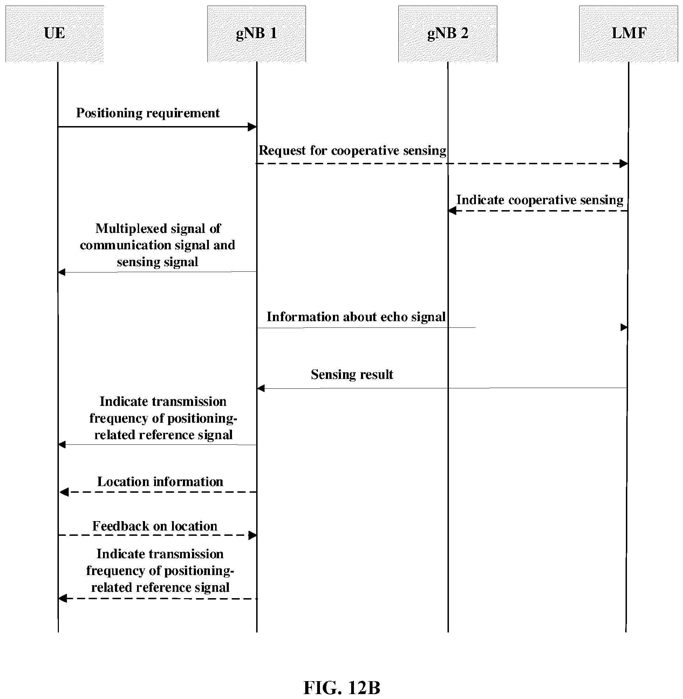

The foregoing describes, with reference to the accompanying drawings, schematic configurations and operation procedures of a base station, a terminal device, and a core network side entity that are implemented according to the present disclosure. The following describes exemplary interactions between the base station, the UE, and the core network according to embodiments of the present disclosure with reference to FIG. 12A and FIG. 12B.

FIG. 12A illustrates interactions between the base station, the UE, and the core network in a case where sensing is initiated by the base station. For example, in a case of determining that dynamic adjustment of a transmission frequency of a positioning-related reference signal needs to be enabled, the base station can start to transmit to the UE a multiplexed signal multiplexing a communication signal and a sensing signal. As shown in FIG. 12A, a gNB 1 serving as a primary serving base station of the UE can transmit the multiplexed signal to the UE, and receive, from the UE, an echo signal of the sensing signal multiplexed in the multiplexed signal. Then, the gNB 1 can transmit information about the echo signal to an LMF of the core network. As described in detail above, the LMF can calculate a difference between the echo signal and the sensing signal, and determine a sensing result for the UE based at least on the difference. As described above, the sensing result can include a distance between the UE and the gNB 1, an angle between the UE and the gNB 1, a moving speed of the UE, and/or a location of the UE. Next, the LMF can transmit the sensing result to the gNB 1. The gNB 1 can determine a moving speed of the UE based on the sensing result, and dynamically adjust the transmission frequency of the positioning-related reference signal based on the moving speed of the UE. The gNB 1 can notify the UE of the adjusted transmission frequency.

After the gNB 1 receives the sensing result from the LMF, in a case where the gNB 1 determines, based on the sensing result, that another base station needs to be requested to cooperate (for example, in a case where the gNB 1 determines that the moving speed of the UE is higher than a predetermined threshold), the gNB 1 can additionally transmit, to the LMF, request information for requesting one or more other base stations to cooperate to sense a location of the UE. Upon receiving such request information, the LMF can select appropriate base stations (for example, those participating in positioning the UE based on the mobile communication positioning technology) to participate in cooperative sensing and transmit an indication of cooperative sensing to these base stations (for example, gNB 2 shown in FIG. 12A). The base stations participating in cooperative sensing can then receive from the UE, as described with reference to FIG. 11B, an echo signal of the sensing signal transmitted by the gNB 1 (and other base stations involved in the cooperative sensing), and/or transmit their own sensing signals to the UE and receive echo signals of the sensing signals, and transmit information about the one or more echo signals to the LMF (for brevity, these processes are not shown in FIG. 12A). After the information about the echo signal is received from each base station that participates in cooperative sensing, the LMF can determine a sensing result of cooperative sensing based on such information, and transmit the result to the primary serving base station gNB 1 of the UE. The gNB 1 can then dynamically adjust a transmission frequency of the positioning-related reference signal based on the sensing result of cooperative sensing.

Optionally, as described above, the gNB 1 can further transmit to the UE the location information based on the sensing result or the location information jointly determined based on both sensing and the mobile communication positioning technology. The UE can verify, based on the autonomously determined location, a location indicated in the sensing result, and feed back a verification result to the gNB 1. The gNB 1 can further dynamically adjust, based on the feedback, a transmission frequency of the positioning-related reference signal and indicate a new transmission frequency to the UE.

FIG. 12B illustrates interactions between the base station, the UE, and the core network in a case where sensing is initiated by the UE. For example, the UE transmits a positioning requirement to a gNB 1 that serves as a primary serving base station of the UE, so as to trigger the gNB 1 to transmit to the UE a multiplexed signal that multiplexes a communication signal and a sensing signal. Then, as described with reference to FIG. 12B, the gNB 1 can receive an echo signal of the sensing signal from the UE and transmit information indicating the echo signal to the LMF of the core network. The LMF can calculate a sensing result and transmit the sensing result to the gNB 1. The gNB 1 can dynamically adjust a transmission frequency of the positioning-related reference signal based on a positioning accuracy requirement of the UE and a moving speed of the UE according to the sensing result. The gNB 1 can notify the UE of the adjusted transmission frequency.

After the gNB 1 receives a positioning requirement from the UE, in a case where the gNB 1 determines, based on the positioning requirement, that another base station needs to be requested to cooperate (for example, in a case where the gNB 1 determines that the UE has a high positioning accuracy requirement), the gNB 1 can additionally transmit, to the LMF, request information for requesting one or more other base stations to cooperate to sense a location of the UE. Upon receiving such request information, the LMF can select appropriate base stations (for example, those participating in positioning the UE based on the mobile communication positioning technology) to participate in cooperative sensing and transmit an indication of cooperative sensing to these base stations (for example, gNB 2 shown in FIG. 12B). The base station that participates in cooperative sensing can then receive a corresponding echo signal and transmit information about the echo signal to the LMF, as described with reference to FIG. 11B and FIG. 12A. In the LMF, the information can be combined to determine a sensing result of cooperative sensing, and transmits the result to the primary serving base station gNB 1 of the UE. The gNB 1 can then dynamically adjust a transmission frequency of the positioning-related reference signal based on the sensing result of cooperative sensing.

Similar to that described with reference to FIG. 12A, optionally, the gNB 1 can further transmit to the UE the location information based on the sensing result or the location information jointly determined based on both sensing and the mobile communication positioning technology. The UE can verify, based on the autonomously determined location, a location indicated in the sensing result, and feed back a verification result to the gNB 1. The gNB 1 can further dynamically adjust, based on the feedback, a transmission frequency of the positioning-related reference signal and indicate a new transmission frequency to the UE.

It should be noted that the interactions shown in FIG. 12A and FIG. 12B are merely exemplary rather than limiting. For example, according to the present disclosure, a multiplexed signal that multiplexes a sensing signal and a multiplexed signal can alternatively be periodically transmitted instead of being triggered by the base station or the UE.

The present disclosure has been described in detail above with reference to the accompanying drawings. The present disclosure enables implementation of integrated sensing and communication and implementation of enhanced services on this basis.

It should be understood that the machine-executable instructions in the machine-readable storage medium or program product according to the embodiments of the present disclosure can be configured to perform operations corresponding to the device and method embodiments described above. When referring to the above device and method embodiments, the embodiments of the machine-readable storage medium or the program product are clear to those skilled in the art, and therefore description thereof will not be repeated herein. A machine-readable storage media and a program product for carrying or including the above-described machine-executable instructions also fall within the scope of the present disclosure. Such storage medium can include, but is not limited to, a floppy disk, an optical disk, a magneto-optical disk, a memory card, a memory stick, and the like.

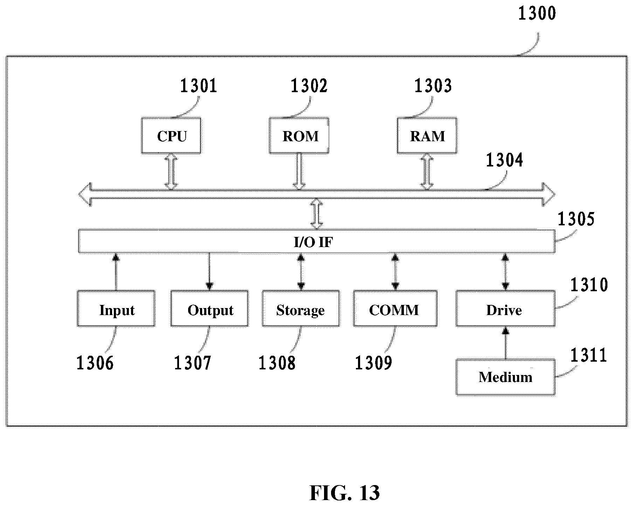

In addition, it should be understood that the above series of processing and devices can alternatively be implemented by software and/or firmware. In the case of implementation by software and/or firmware, a program constituting the software is installed from a storage medium or a network to a computer having a dedicated hardware configuration, such as a general-purpose computer 1300 shown in FIG. 13. When various programs are installed, the computer is capable of performing various functions and so on. FIG. 13 is a block diagram of an example structure of a computer as an information processing device that can be used in an embodiment of the present disclosure. In an example, the computer can correspond to the foregoing exemplary device on the core network side according to the present disclosure. In another example, the computer can correspond to the foregoing exemplary terminal device according to the present disclosure.

In FIG. 13, a central processing unit (CPU) 1301 executes various processing based on a program stored in a read-only memory (ROM) 1302 or a program loaded from a storage portion 1308 to a random access memory (RAM) 1303. The RAM 1303 also stores data required for executing various processing and the like by the CPU 1301 when necessary.

The CPU 1301, the ROM 1302, and the RAM 1303 are connected with each other via a bus 1304. An input/output port 1305 is also connected to the bus 1304.

The following components are connected to the input/output port 1305: an input part 1306, including a keyboard, a mouse, and the like; an output part 1307, including a display such as a cathode-ray tube (CRT) and a liquid crystal display (LCD), a speaker, and the like; a storage part 1308, including a hard disk and the like; and a communication part 1309, including a network interface card such as a LAN card or a modem. The communication part 1309 performs communication processing via a network such as the Internet.

Based on needs, a drive 1310 is also connected to the input/output port 1305. A removable medium 1311 such as a magnetic disk, an optical disk, a magneto-optical disk, a semiconductor memory, or the like is mounted on the drive 1310 when necessary, so that a computer program read therefrom is installed in the storage part 1308 when necessary.

In a case where the foregoing series of processing are implemented by software, programs constituting the software are installed from a network such as the Internet or a storage medium such as the removable medium 1311.

Those skilled in the art should understand that such a storage medium is not limited to the removable medium 1311 shown in FIG. 13, in which the program is stored and distributed independent from a device to provide the program for users. For example, the removable medium 1311 includes a magnetic disk (including a floppy disk (registered trademark)), an optical disc (including a compact disk read-only memory (CD-ROM) and a digital versatile disk (DVD)), a magneto-optical disc (including a mini disk (MD) (registered trademark)), and a semiconductor memory. Alternatively, the storage medium can be the ROM 1302, a hard disk included in the storage part 1308, or the like, in which the program is stored, and can be distributed to users along with a device including the storage medium.

The technology of the present disclosure can be applied to various products.

For example, the electronic device 30 according to the embodiments of the present disclosure can be implemented as various control devices/base stations or being included in various control devices/base stations, and the method shown in FIG. 4 can alternatively be implemented by various control devices/base stations. For example, the electronic device 70 according to the embodiments of the present disclosure can be implemented as various terminal devices/user equipments or being included in various terminal devices/user equipments, and the method shown in FIG. 8 can alternatively be implemented by various terminal devices/user equipments.

For example, the control devices/base stations mentioned in the present disclosure can be implemented as any type of base station, for example, an evolved Node B (gNB), such as a macro gNB and a small gNB. The small gNB can be a gNB covering a cell smaller than the macro cell, such as a pico gNB, a micro gNB, and a home (femto) gNB. Alternatively, the base station can be implemented as any other type of base station, such as a NodeB and a Base Transceiver Station (BTS). The base station can include: a body (also referred to as a base station device) configured to control radio communication; and one or more remote radio heads (RRHs) disposed at a different location from the body. In addition, various types of terminals which will be described below can each operate as a base station by performing base station functions temporarily or semi-persistently.

For example, the terminal device mentioned in the present disclosure, also referred to as user equipment in some examples, can be implemented as a mobile terminal (such as a smartphone, a tablet personal computer (PC), a notebook PC, a portable game terminal, a portable/dongle type mobile router and digital camera) or in-vehicle terminal (such as car navigation device). The user equipment can also be implemented as a terminal that performs machine-to-machine (M2M) communication (also referred to as a machine type communication (MTC) terminal). Further, the user equipment can be a radio communication module (such as an integrated circuit module including a single wafer) installed on each of the above terminals.

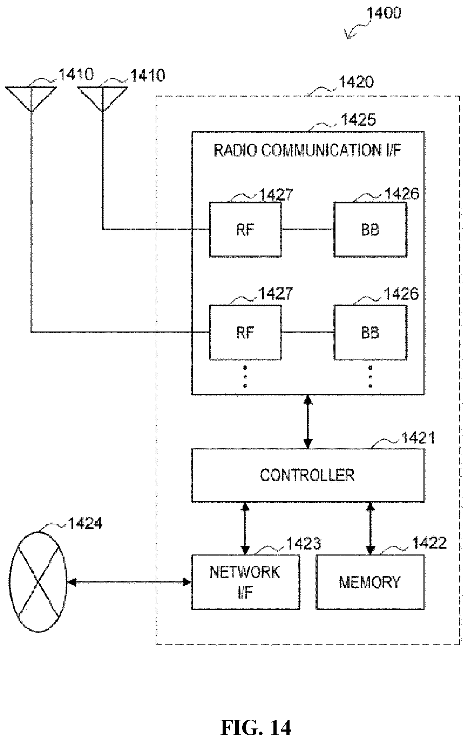

Use cases according to the present disclosure will be described below with reference to FIGs. 14 to 17.

### [Examples for the base station]

It should be understood that the term "base station" in the present disclosure has the full breadth of its normal meaning, and at least includes a wireless communication station that is used as part of a wireless communication system or a radio system to facilitate communication. Examples of the base station can be, for example, but not limited to, the following: a base station can be one or both of a base transceiver station (BTS) and a base station controller (BSC) in a GSM system, or can be one or both of a radio network controller (RNC) and Node B in a WCDMA system, or can be an eNB in an LTE and LTE-Advanced system, or can be a gNB, an eLTE eNB, or the like present in the 5G communication system, or a corresponding network node in a future communication system. Part of functions of a base station in the present disclosure can also be implemented as an entity that has control functions to communication in the D2D, M2M, and V2V communication scenarios, or as an entity that plays a role of spectrum coordination in the cognitive radio communication scenario.

### Example 1

FIG. 14 is a block diagram illustrating a first example of a schematic configuration of a gNB to which the technology in content of the present disclosure is applicable. The gNB 1400 includes a plurality of antennas 1410 and a base station device 1420. The base station device 1420 and each antenna 1410 can be connected to each other via an RF cable. In one implementation, the gNB 1400 (or base station device 1420) herein can correspond to the electronic devices 30 described above.

Each of the antennas 1410 includes a single or multiple antenna elements (such as multiple antenna elements included in a multiple input and multiple output (MIMO) antenna), and is used for the base station device 1420 to transmit and receive radio signals. As shown in FIG. 14, the gNB 1400 can include multiple antennas 1410. For example, multiple antennas 1410 can be compatible with multiple frequency bands used by the gNB 1400.

The base station device 1420 includes a controller 1421, a memory 1422, a network interface 1423, and a radio communication interface 1425.

The controller 1421 can be, for example, a CPU or a DSP, and operates various functions of higher layers of the base station device 1420. For example, controller 1421 generates data packets from data in signals processed by the radio communication interface 1425, and transfers the generated packets via the network interface 1423. The controller 1421 can bundle data from multiple baseband processors to generate the bundled packets, and transfer the generated bundled packets. The controller 1421 can have logic functions of performing control such as radio resource control, radio bearer control, mobility management, admission control, and scheduling. This control can be performed in corporation with a gNB or a core network node in the vicinity. The memory 1422 includes a RAM and a ROM, and stores a program that is executed by the controller 421 and various types of control data (such as a terminal list, transmission power data, and scheduling data).

The network interface 1423 is a communication interface for connecting the base station device 1420 to the core network 1424. The controller 1421 can communicate with a core network node or another gNB via the network interface 1423. In this case, the gNB 1400 and the core network node or other gNBs can be connected to each other through a logical interface (such as an S1 interface and an X2 interface). The network interface 1423 can also be a wired communication interface or a radio communication interface for radio backhaul lines. If the network interface 1423 is a radio communication interface, the network interface 1423 can use a higher frequency band for radio communication than a frequency band used by the radio communication interface 1425.

The radio communication interface 1425 supports any cellular communication schemes (such as Long Term Evolution (LTE) and LTE-Advanced), and provides, via the antenna 1410, radio connection to a terminal located in a cell of the gNB 1400. The radio communication interface 1425 can typically include, for example, a baseband (BB) processor 1426 and an RF circuit 1427. The BB processor 1426 can perform, for example, encoding/decoding, modulation/demodulation, and multiplexing/demultiplexing, and performs various types of signal processing of layers (such as L1, Medium Access Control (MAC), Radio Link Control (RLC), and Packet Data Convergence Protocol (PDCP)). Instead of the controller 1421, the BB processor 1426 can have a part or all of the above-described logic functions. The BB processor 1426 can be a memory that stores a communication control program, or a module that includes a processor configured to execute the program and a related circuit. Updating the program can allow the functions of the BB processor 1426 to be changed. The module can be a card or a blade that is inserted into a slot of the base station device 1420. Alternatively, the module can also be a chip that is mounted on the card or the blade. Meanwhile, the RF circuit 1427 can include, for example, a mixer, a filter, and an amplifier, and transmits and receives radio signals via the antenna 1410. Although FIG. 14 illustrates the example in which one RF circuit 1427 is connected to one antenna 1410, the present disclosure is not limited to thereto; rather, one RF circuit 1427 can connect to a plurality of antennas 1410 at the same time.

As illustrated in FIG. 14, the radio communication interface 1425 can include the multiple BB processors 1426. For example, the multiple BB processors 1426 can be compatible with multiple frequency bands used by gNB 1400. As illustrated in FIG. 14, the radio communication interface 1425 can include the multiple RF circuits 1427. For example, the multiple RF circuits 1427 can be compatible with multiple antenna elements. Although FIG. 14 illustrates the example in which the radio communication interface 1425 includes the multiple BB processors 1426 and the multiple RF circuits 1427, the radio communication interface 1425 can also include a single BB processor 1426 or a single RF circuit 1427.

### Example 2

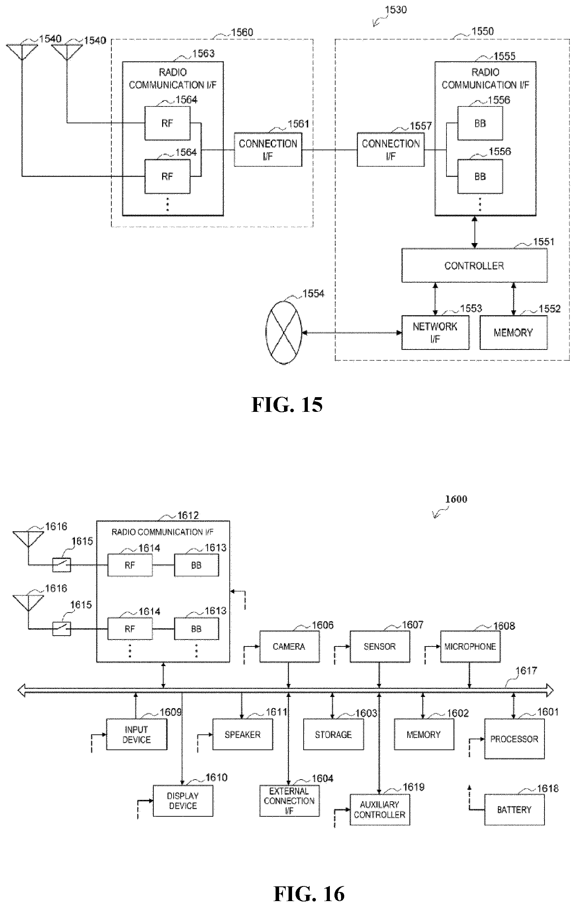

FIG. 15 is a block diagram illustrating a second example of a schematic configuration of a gNB to which the technology in content of the present disclosure is applicable. The gNB 1530 includes a plurality of antennas 1540, a base station device 1550, and an RRH 1560. The RRH 1560 and each antenna 1540 can be connected to each other via an RF cable. The base station device 1550 and the RRH 1560 can be connected to each other via a high speed line such as a fiber optic cable. In one implementation, the gNB 1530 (or base station device 1550) herein can correspond to the electronic device 30 described above.

Each of the antennas 1540 includes a single or multiple antenna elements such as multiple antenna elements included in a MIMO antenna and is used for the RRH 1560 to transmit and receive radio signals. As shown in FIG. 15, the gNB 1530 can include multiple antennas 1540. For example, multiple antennas 1540 can be compatible with multiple frequency bands used by the gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 14.

The radio communication interface 1555 supports any cellular communication scheme (such as LTE and LTE-Advanced) and provides radio communication to terminals positioned in a sector corresponding to the RRH 1560 via the RRH 1560 and the antenna 1540. The radio communication interface 1555 can typically include, for example, a BB processor 1556. The BB processor 1556 is the same as the BB processor 1426 described with reference to FIG. 14, except that the BB processor 1556 is connected to the RF circuit 1564 of the RRH 1560 via the connection interface 1557. As illustrated in FIG. 15, the radio communication interface 1555 can include the multiple BB processors 1556. For example, the multiple BB processors 1556 can be compatible with multiple frequency bands used by gNB 1530. Although FIG. 15 illustrates the example in which the radio communication interface 1555 includes multiple BB processors 1556, the radio communication interface 1555 can also include a single BB processor 1556.

The connection interface 1557 is an interface for connecting the base station device 1550 (radio communication interface 1555) to the RRH 1560. The connection interface 1557 can also be a communication module for communication in the above-described high speed line that connects the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 can also be a communication module for communication in the above-described high speed line.

The radio communication interface 1563 transmits and receives radio signals via the antenna 1540. The radio communication interface 1563 can typically include, for example, the RF circuitry 1564. The RF circuit 1564 can include, for example, a mixer, a filter, and an amplifier, and transmits and receives radio signals via the antenna 1540. Although FIG. 15 illustrates the example in which one RF circuit 1564 is connected to one antenna 1540, the present disclosure is not limited to thereto; rather, one RF circuit 1564 can connect to a plurality of antennas 1540 at the same time.

As illustrated in FIG. 15, the radio communication interface 1563 can include the multiple RF circuits 1564. For example, the multiple RF circuits 1564 can support multiple antenna elements. Although FIG. 15 illustrates the example in which the radio communication interface 1563 includes the multiple RF circuits 1564, the radio communication interface 1563 can also include a single RF circuit 1564.

### [Examples for the user equipment]

### Example 1

FIG. 16 is a block diagram illustrating an example of a schematic configuration of an smartphone 1600 to which the technology of the present disclosure can be applied. A smartphone 1600 includes a processor 1601, a memory 1602, a storage device 1603, an external connection interface 1604, a camera device 1606, a sensor 1607, a microphone 1608, an input device 1609, a display device 1610, a speaker 1611, a radio communication interface 1612, one or more antenna switches 1615, one or more antennas 1616, a bus 1617, a battery 1618, and an auxiliary controller 1619. In an implementation, the smartphone 1600 (or the processor 1601) herein can correspond to the above-described electronic device 70.

The processor 1601 can be, for example, a CPU or a system on a chip (SoC), and controls functions of the application layer and other layers of the smartphone 1600. The memory 1602 includes a RAM and a ROM, and stores a program that is executed by the processor 1601. The storage device 1603 can include a storage medium such as a semiconductor memory and a hard disk. The external connection interface 1604 is an interface for connecting an external device (for example, a memory card and a universal serial bus (USB) device) to the smartphone 1600.

The camera device 1606 includes an image sensor (for example, a charge coupled device (CCD) and a complementary metal oxide semiconductor (CMOS)), and generates a captured image. The sensor 1607 can include a set of sensors, such as a measurement sensor, a gyro sensor, a geomagnetic sensor, and an acceleration sensor. The microphone 1608 converts the sound input of the smart phone 1600 into an audio signal. The input device 1609 includes, for example, a touch sensor configured to detect touches on the screen of the display device 1610, a keypad, a keyboard, buttons, or switches, and receives input operations or information of a user. The display device 1610 includes a screen (for example, a liquid crystal display (LCD) and an organic light emitting diode (OLED) display), and displays output images of the smartphone 1600. The speaker 1611 converts output audio signals of the smartphone 1600 into sound.

The radio communication interface 1612 supports any cellular communication scheme (such as LTE and LTE-Advanced) and performs radio communication. The radio communication interface 1612 can typically include, for example, a BB processor 1613 and an RF circuit 1619. The BB processor 1613 can perform, for example, encoding/decoding, modulation/demodulation, and multiplexing/demultiplexing, and performs various types of signal processing for radio communication. Meanwhile, the RF circuit 1614 can include, for example, a mixer, a filter, and an amplifier, and transmits and receives radio signals via the antenna 1616. The radio communication interface 1612 can be a chip module on which the BB processor 1613 and the RF circuit 1614 are integrated. As shown in FIG. 16, the radio communication interface 1612 can include multiple BB processors 1613 and multiple RF circuits 1614. Although FIG. 16 illustrates the example in which the radio communication interface 1612 includes the multiple BB processors 1613 and the multiple RF circuits 1614, the radio communication interface 1612 can also include a single BB processor 1613 or a single RF circuit 1614.

In addition to a cellular communication scheme, the radio communication interface 1612 can support other types of radio communication schemes, such as a short-range wireless communication scheme, a near-field communication scheme, and a wireless local area network (LAN) scheme. In this case, the radio communication interface 1612 can include the BB processor 1613 and the RF circuit 1614 as to each radio communication scheme.

Each of the antenna switches 1615 switches the connection destination of the antenna 1616 among multiple circuits (for example, circuits for different radio communication schemes) included in the radio communication interface 1612.

Each of the antennas 1616 includes one or more antenna elements (such as multiple antenna elements included in a MIMO antenna), and is used for the radio communication interface 1612 to transmit and receive radio signals. As shown in FIG. 16, the smartphone 1600 can include multiple antennas 1616. Although FIG. 16 illustrates an example in which the smartphone 1600 includes multiple antennas 1616, the radio communication interface 1600 can alternatively include a single antenna 1616.

In addition, the smartphone 1600 can include the antennas 1616 for every radio communication scheme. In this case, the antenna switch 1615 can be removed from configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the radio communication interface 1612, and the auxiliary controller 1619. The battery 1618 provides power for various blocks of the smartphone 1600 illustrated in FIG. 16 via feeders, and the feeders are partially expressed as dashed lines in the figure. The auxiliary controller 1619, for example, operates the minimum necessary functions of the smartphone 1600 in sleep mode.

### Example 2

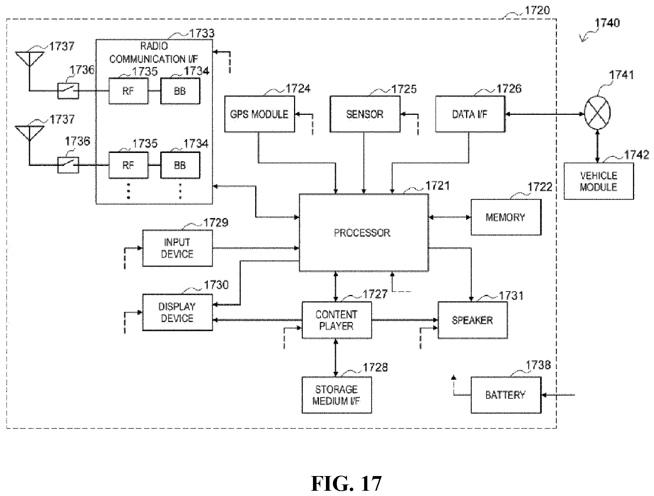

FIG. 17 is a block diagram illustrating an example of a schematic configuration of a car navigation device 1720 to which the technology of the present disclosure can be applied. A car navigation device 1720 includes a processor 1721, a memory 1722, a global positioning system (GPS) 1724, a sensor 1725, a data interface 1726, a content player 1727, a storage medium interface 1728, an input device 1729, a display device 1730, a speaker 1731, a radio communication interface 1733, one or more antenna switches 1736, one or more antennas 1737, and a battery 1738. In an implementation, the car navigation device 1720 (or the processor 1721) herein can correspond to the above-described electronic device 50 and/or electronic device 100.

The processor 1721 can be, for example, a CPU or a SoC, and controls the navigation function and other functions of the car navigation device 1720. The memory 1722 includes a RAM and a ROM, and stores a program that is executed by the processor 1721.

The GPS module 1724 performs measurement on a location (such as a latitude, a longitude, and an altitude) of the car navigation device 1720 by using GPS signals received from GPS satellites. The sensor 1725 can include a set of sensors, such as a gyro sensor, a geomagnetic sensor, and an air pressure sensor. The data interface 1726 is connected to, for example, an in-vehicle network 1741 via a terminal not shown, and acquires data generated by the vehicle (such as vehicle speed data).

The content player 1727 plays back content stored in a storage medium (such as a CD and a DVD), which is inserted into the storage medium interface 1728. The input device 1729 includes, for example, a touch sensor configured to detect touches on the screen of the display device 1730, buttons, or switches, and receives input operations or information of a user. The display device 1730 includes a screen, for example, an LCD or OLED screen, and displays images for the navigation function or playback content. The speaker 1731 outputs the sound for the navigation function or playback content.

The radio communication interface 1733 supports any cellular communication scheme (such as LTE, LTE-Advanced, and NR) and performs radio communication. The radio communication interface 1733 can typically include, for example, a BB processor 1734 and an RF circuit 1735. The BB processor 1734 can perform, for example, encoding/decoding, modulation/demodulation, and multiplexing/demultiplexing, and performs various types of signal processing for radio communication. Meanwhile, the RF circuit 1735 can include, for example, a mixer, a filter, and an amplifier, and transmits and receives radio signals via the antenna 1737. The radio communication interface 1733 can alternatively be a chip module on which the BB processor 1734 and the RF circuit 1735 are integrated. As shown in FIG. 17, the radio communication interface 1733 can include multiple BB processors 1734 and multiple RF circuits 1735. Although FIG. 17 illustrates the example in which the radio communication interface 1733 includes the multiple BB processors 1734 and the multiple RF circuits 1735, the radio communication interface 1733 can also include a single BB processor 1734 or a single RF circuit 1735.

In addition to a cellular communication scheme, the radio communication interface 1733 can support other types of radio communication schemes, such as a short-range wireless communication scheme, a near-field communication scheme, and a wireless LAN scheme. In this case, the radio communication interface 1733 can include the BB processor 1734 and the RF circuit 1735 as to each radio communication scheme.

Each of the antenna switches 1736 switches the connection destination of the antenna 1737 among multiple circuits (for example, circuits for different radio communication schemes) included in the radio communication interface 1733.

Each of the antennas 1737 includes one or more antenna elements (such as multiple antenna elements included in a MIMO antenna), and is used for the radio communication interface 1733 to transmit and receive radio signals. As shown in FIG. 17, the car navigation device 1720 can include multiple antennas 1737. Although FIG. 17 illustrates an example in which the car navigation device 1720 includes multiple antennas 1737, the car navigation device 1720 can alternatively include a single antenna 1737.

In addition, the car navigation device 1720 can include the antenna 1737 for every radio communication scheme. In this case, the antenna switch 1736 can be removed from configuration of the car navigation device 1720.

The battery 1738 provides power for various blocks of the car navigation device 1720 illustrated in FIG. 17 via feeders, and the feeders are partially expressed as dashed lines in the figure. The battery 1738 accumulates power supplied by the vehicle.

The technology of the present disclosure can also be implemented as an in-vehicle system (or vehicle) 1740 including one or more blocks of the car navigation device 1720, the in-vehicle network 1741, and a vehicle module 1742. The vehicle module 1742 generates vehicle data (such as vehicle speed, engine speed, and failure information), and outputs the generated data to the in-vehicle network 1741.

The exemplary embodiments of the present disclosure have been described above with reference to the drawings, but the present disclosure is of course not limited to the above examples. Those skilled in the art can obtain various changes and modifications within the scope of the appended claims, and it should be understood that these changes and modifications will naturally fall within the technical scope of the present disclosure.

It should be understood that the machine-executable instructions in the machine-readable storage medium or program product according to the embodiments of the present disclosure can be configured to perform operations corresponding to the device and method embodiments described above. When referring to the above device and method embodiments, the embodiments of the machine-readable storage medium or the program product are clear to those skilled in the art, and therefore description thereof will not be repeated herein. A machine-readable storage media and a program product for carrying or including the above-described machine-executable instructions also fall within the scope of the present disclosure. Such storage medium can include, but is not limited to, a floppy disk, an optical disk, a magnetooptical disk, a memory card, a memory stick, and the like.

**In** addition, it should be understood that the above series of processing and devices can alternatively be implemented by software and/or firmware. **In** a case of implementation by using software and/or firmware, a corresponding program constituting corresponding software is stored in a storage medium of a related device (for example, in a memory 304, 704, or 904 of the electronic device 30 shown in FIG. 3, the electronic device 70 shown in FIG. 7, or the electronic device 90 shown in FIG. 9). When the program is executed, various functions can be executed.

For example, a plurality of functions included in one unit in the above embodiments can be implemented by separate devices. Alternatively, the multiple functions implemented by the multiple units in the above embodiments can be implemented by separate devices, respectively. In addition, one of the above functions can be realized by multiple units. Needless to say, such a configuration is included in the technical scope of the present disclosure.

In this specification, the steps described in the flowchart include not only processes performed in time series in the described order, but also processes performed in parallel or individually rather than necessarily in time series. In addition, even in the steps processed in time series, needless to say, the order can be changed appropriately.

Although the present disclosure and its advantages have been described in detail, it should be understood that various modifications, replacements, and changes can be made without departing from the spirit and scope of the present disclosure as defined by the appended claims. Moreover, the terms "include", "comprise", or their any other variant in the embodiments of the present disclosure is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

In addition, the present disclosure can further have the following configurations:
(1) An electronic device for a control device side of a wireless communication system, including:
   a processing circuit configured to:
   transmit a multiplexed signal to a terminal device, where the multiplexed signal multiplexes a communication signal and a sensing signal, the sensing signal is at least used for sensing a distance between the terminal device and the electronic device, an angle between the terminal device and the electronic device, and/or a moving speed of the terminal device so as to determine a location of the terminal device, and
   receive an echo signal resulting from at least reflection, refraction and/or diffraction of the sensing signal by the terminal device.
(2) The electronic device of (1), where the communication signal and the sensing signal are time-division multiplexed in units of symbols.
(3) The electronic device of (1) or (2), where the processing circuit is further configured to transmit, to the terminal device, multiplexing information indicating how the communication signal and the sensing signal are multiplexed.
(4) The electronic device of (1), where the processing circuit is further configured to:
   transmit, to an entity of a core network, information at least indicating the echo signal, and
   receive a sensing result from the entity, where the sensing result includes the distance, the angle, the moving speed, and/or the location of the terminal device,
   where the sensing result is determined at least based on a difference between the sensing signal and the echo signal, and the difference includes one or more of: a doppler shift, a time of flight, a change of amplitude, a change of frequency, and a change of phase.
(5) The electronic device of (4), where the processing circuit is further configured to:
   determine, based on the sensing result, a relationship in terms of magnitude between the moving speed of the terminal device and at least one threshold, and
   dynamically adjust, based on the determination, a transmission frequency of a positioning-related reference signal.
(6) The electronic device of (5), where the processing circuit is further configured to:
   in response to determining that the moving speed of the terminal device is lower than or equal to a first threshold, decrease the transmission frequency of the positioning-related reference signal,
   in response to determining that the moving speed of the terminal device is higher than the first threshold and lower than or equal to a second threshold, maintain the transmission frequency of the positioning-related reference signal, and
   in response to determining that the moving speed of the terminal device is higher than the second threshold:
      - increase the transmission frequency of the positioning-related reference signal, and/or
      - transmit request information to the entity of the core network to request one or more other electronic devices to cooperate so as to perform sensing on the terminal device.
(7) The electronic device of (6), where increasing or decreasing the transmission frequency of the positioning-related reference signal includes:
   - shortening or extending a transmission cycle of the reference signal, or
   - increasing or decreasing a density of symbols occupied by the reference signal.
(8) The electronic device of (1), where the processing circuit is further configured to:
   receive, from the terminal device, information indicating a positioning requirement,
   determine a positioning accuracy requirement of the terminal device, and
   dynamically adjust a transmission frequency of a positioning-related reference signal based on the determined positioning accuracy requirement of the terminal device, where
      - in response to determining that the terminal device has a lower positioning accuracy requirement, the transmission frequency of the positioning-related reference signal is maintained or decreased, and
      - in response to determining that the terminal device has a higher positioning accuracy requirement, the transmission frequency of the positioning-related reference signal is increased, and/or request information is transmitted to the entity of the core network to request one or more other electronic devices to cooperate so as to sense the location of the terminal device.
(9) The electronic device of (6) or (8), where the one or more other electronic devices are one or more base stations participating in locating the terminal device based a mobile communication positioning technology, where the mobile communication positioning technology includes one or more of Downlink-Time Difference of Arrival (DL-TDOA), Uplink-Time Difference of Arrival (UL-TDOA), Downlink-Angle of Departure (DL-AoD), Uplink-Angle of Arrival (UL-AoA), Multi-Round Trip Time (Multi-RTT), and New Radio Enhanced Cell ID (NR E-CID).
(10) The electronic device of (4), where the processing circuit is further configured to:
   obtain a first location of the terminal device based on a mobile communication positioning technology, where the mobile communication positioning technology includes one or more of the following: A-GNSS, motion sensor-based positioning, DL-TDOA, UL-TDOA, DL-AoD, UL-AoA, Multi-RTT, and NR E-CID;
   determine a second location of the terminal device based on the sending result; and
   determine the location of the terminal device by weighting the first location and the second location respectively.
(11) The electronic device of (10), where in a case where the communication signal and the sensing signal are time-division multiplexed, weights of the first location and the second location are determined based on a ratio of a quantity of symbols occupied by the communication signal to a quantity of symbols occupied by the sensing signal in a predetermined period.
(12) The electronic device of (4) or (10), where the processing circuit is further configured to:
   transmit, to the terminal device, information indicating the location of the terminal device, where the information includes the sensing result or the location determined based on the first location and the second location; and
   dynamically adjust, based on feedback of the terminal device on the information indicating the location of the terminal device, a transmission frequency of a positioning-related reference signal.
(13) The electronic device of (1), where the communication signal includes one or more of the following signals: a positioning reference signal (PRS), a data demodulation reference signal (DMRS), a channel state measurement reference signal (CSI-RS), a sounding reference signal (SRS), and a communication data signal.
(14) The electronic device of (5) or (8), where the positioning-related reference signal includes one or more of the following reference signals: a positioning reference signal (PRS), a demodulation reference signal (DMRS), a channel state information reference signal (CSI-RS), and a sounding reference signal (SRS).
(15) A method for a control device side of a wireless communication system, including:
   transmitting a multiplexed signal to a terminal device, where the multiplexed signal multiplexes a communication signal and a sensing signal, the sensing signal is at least used for sensing a distance between the terminal device and the electronic device, an angle between the terminal device and the electronic device, and/or a moving speed of the terminal device so as to determine a location of the terminal device, and
   receiving an echo signal resulting from at least reflection, refraction and/or diffraction of the sensing signal by the terminal device.
(16) An electronic device for a terminal device side of a wireless communication system, including:
   a processing circuit configured to receive a multiplexed signal from a base station,
   where the multiplexed signal multiplexes a communication signal and a sensing signal,
   where an echo signal resulting from at least reflection, refraction and/or diffraction of the sensing signal by the electronic device is transmitted to at least one or more base stations that include the base station, and
   where the sensing signal is at least used for sensing a distance between the electronic device and the base station, an angle between the electronic device and the base station, and/or a moving speed of the electronic device so as to determine a location of the electronic device.
(17) The electronic device of (16), where the communication signal and the sensing signal are time-division multiplexed in units of symbols.
(18) The electronic device of (16) or (17), where the processing circuit is further configured to receive, from the base station, multiplexing information indicating how the communication signal and the sensing signal are multiplexed.
(19) The electronic device of (16) or (17), where the processing circuit is further configured to:
   receive, from the base station, information indicating a transmission frequency of a positioning-related reference signal, where the transmission frequency of the reference signal is dynamically adjusted according to a sensing result of the moving speed of the electronic device based on the sensing signal.
(20) The electronic device of (16) or (17), where the processing circuit is further configured to:
   transmit, to the base station, information indicating a positioning requirement, and
   receive, from the base station, information indicating a transmission frequency of a positioning-related reference signal, where the transmission frequency of the reference signal is dynamically adjusted according to a positioning accuracy requirement.
(21) The electronic device of (16) or (17), where the processing circuit is further configured to:
   receive, from the base station, information indicating a location of the electronic device, where the information includes a sensing result based on the sensing signal or a joint positioning result, where the sensing result includes the distance, the sensed angle, the moving speed, and/or the location of the electronic device, and the joint positioning result includes a location of the electronic device determined according to both a first location of the electronic device based on a mobile communication positioning technology and a second location based on the sensing result,
   autonomously determine a location of the electronic device; and
   feed back to the base station based on a difference between the autonomously determined location and the location indicated in the information received from the base station.
(22) The electronic device of (21), where autonomously determining the location of the electronic device includes estimating the location of the electronic device based on one or more of the following information: location information obtained based on a RAT-only-DL positioning technology, location information obtained based on an auxiliary global navigation satellite system (A-GNSS), location information obtained based on a global positioning system (GPS), a last positioning result, and movement information of the electronic device determined based on a motion sensor.
(23) A method for a terminal device side of a wireless communication system, including:
   receiving a multiplexed signal from a base station,
   where the multiplexed signal multiplexes a communication signal and a sensing signal,
   where an echo signal resulting from at least reflection, refraction and/or diffraction of the sensing signal by the electronic device is transmitted to at least one or more base stations that include the base station, and
   where the sensing signal is at least used for sensing a distance between the electronic device and the base station, an angle between the electronic device and the base station, and/or a moving speed of the electronic device so as to determine a location of the electronic device.
(24) An electronic device for a core network device side of a wireless communication system, including:
   a processing circuit configured to:
   receive, from a base station, information indicating an echo signal resulting from at least reflection, refraction and/or diffraction of a sensing signal by a terminal device,
   determine a sensing result for the terminal device at least based on a difference between the sensing signal and the echo signal, where the sensing result includes a distance between the terminal device and the base station, an angle between the terminal device and the base station, a moving speed of the terminal device, and/or a location of the terminal device, and
   transmit the sensing result to the base station.
(25) The electronic device of (24), where the difference includes one or more of: a doppler shift, a time of flight, a change of amplitude, a change of frequency, and a change of phase.
(26) The electronic device of (24) or (25), where the circuit system is further configured to:
   receive, from the base station, request information for requesting one or more other base stations to cooperate so as to sense the location of the terminal device; and
   transmit, to one or more base stations that participate in positioning the terminal device based on a mobile communication positioning technology, information indicating participation in cooperative sensing, where the mobile communication positioning technology includes one or more of the following: auxiliary global navigation satellite system (A-GNSS), Downlink-Time Difference of Arrival (DL-TDOA), Uplink-Time Difference of Arrival (UL-TDOA), Downlink-Angle of Departure (DL-AoD), Uplink-Angle of Arrival (UL-AoA), Multi-Round Trip Time (Multi-RTT), and New Radio Enhanced Cell ID (NR E-CID).
(27) A method for a core network side of a wireless communication system, including:
   receiving, from a base station, information indicating an echo signal resulting from at least reflection, refraction and/or diffraction of a sensing signal by a terminal device,
   determining a sensing result for the terminal device at least based on a difference between the sensing signal and the echo signal, where the sensing result includes a distance between the terminal device and the base station, an angle between the terminal device and the base station, a moving speed of the terminal device, and/or a location of the terminal device, and
   transmitting the sensing result to the base station.
(28) A non-transitory computer readable storage medium storing executable instructions which, when executed, implement the method of any one of (15), (23), and (27).
(29) A device, including:
   a processor; and
   a storage apparatus that stores executable instructions which, when executed, implement the method of any one of (15), (23), and (27).

## Claims

1. An electronic device for a control device side of a wireless communication system, comprising:
a processing circuit configured to:
transmit a multiplexed signal to a terminal device, wherein the multiplexed signal multiplexes a communication signal and a sensing signal, the sensing signal is at least used for sensing a distance between the terminal device and the electronic device, an angle between the terminal device and the electronic device, and/or a moving speed of the terminal device so as to determine a location of the terminal device, and
receive an echo signal resulting from at least reflection, refraction and/or diffraction of the sensing signal by the terminal device.

2. The electronic device of claim 1, wherein the communication signal and the sensing signal are time-division multiplexed in units of symbols.

3. The electronic device of claim 1 or 2, wherein the processing circuit is further configured to transmit, to the terminal device, multiplexing information indicating how the communication signal and the sensing signal are multiplexed.

4. The electronic device of claim 1, wherein the processing circuit is further configured to:
transmit, to an entity of a core network, information at least indicating the echo signal, and
receive a sensing result from the entity, wherein the sensing result comprises the distance, the angle, the moving speed, and/or the location of the terminal device,
wherein the sensing result is determined at least based on a difference between the sensing signal and the echo signal, and the difference comprises one or more of: a doppler shift, a time of flight, a change of amplitude, a change of frequency, and a change of phase.

5. The electronic device of claim 4, wherein the processing circuit is further configured to:
determine, based on the sensing result, a relationship in terms of magnitude between the moving speed of the terminal device and at least one threshold, and
dynamically adjust, based on the determination, a transmission frequency of a positioning-related reference signal.

6. The electronic device of claim 5, wherein the processing circuit is further configured to:
in response to determining that the moving speed of the terminal device is lower than or equal to a first threshold, decrease the transmission frequency of the positioning-related reference signal,
in response to determining that the moving speed of the terminal device is higher than the first threshold and lower than or equal to a second threshold, maintain the transmission frequency of the positioning-related reference signal, and
in response to determining that the moving speed of the terminal device is higher than the second threshold:
- increase the transmission frequency of the positioning-related reference signal, and/or
- transmit request information to the entity of the core network to request one or more other electronic devices to cooperate so as to perform sensing on the terminal device.

7. The electronic device of claim 6, wherein increasing or decreasing the transmission frequency of the positioning-related reference signal comprises:
- shortening or extending a transmission cycle of the reference signal, or
- increasing or decreasing a density of symbols occupied by the reference signal.

8. The electronic device of claim 1, wherein the processing circuit is further configured to:
receive, from the terminal device, information indicating a positioning requirement,
determine a positioning accuracy requirement of the terminal device, and
dynamically adjust a transmission frequency of a positioning-related reference signal based on the determined positioning accuracy requirement of the terminal device, wherein
- in response to determining that the terminal device has a lower positioning accuracy requirement, the transmission frequency of the positioning-related reference signal is maintained or decreased, and
- in response to determining that the terminal device has a higher positioning accuracy requirement, the transmission frequency of the positioning-related reference signal is increased, and/or request information is transmitted to the entity of the core network to request one or more other electronic devices to cooperate so as to sense the location of the terminal device.

9. The electronic device of claim 6 or 8, wherein the one or more other electronic devices are one or more base stations participating in locating the terminal device based a mobile communication positioning technology, wherein the mobile communication positioning technology comprises one or more of Downlink-Time Difference of Arrival (DL-TDOA), Uplink-Time Difference of Arrival (UL-TDOA), Downlink-Angle of Departure (DL-AoD), Uplink-Angle of Arrival (UL-AoA), Multi-Round Trip Time (Multi-RTT), and New Radio Enhanced Cell ID (NR E-CID).

10. The electronic device of claim 4, wherein the processing circuit is further configured to:
obtain a first location of the terminal device based on a mobile communication positioning technology, wherein the mobile communication positioning technology comprises one or more of the following: A-GNSS, motion sensor-based positioning, DL-TDOA, UL-TDOA, DL-AoD, UL-AoA, Multi-RTT, and NR E-CID;
determine a second location of the terminal device based on the sending result; and
determine the location of the terminal device by weighting the first location and the second location respectively.

11. The electronic device of claim 10, wherein in a case where the communication signal and the sensing signal are time-division multiplexed, weights of the first location and the second location are determined based on a ratio of a quantity of symbols occupied by the communication signal to a quantity of symbols occupied by the sensing signal in a predetermined period.

12. The electronic device of claim 4 or 10, wherein the processing circuit is further configured to:
transmit, to the terminal device, information indicating the location of the terminal device, wherein the information comprises the sensing result or the location determined based on the first location and the second location; and
dynamically adjust, based on feedback of the terminal device on the information indicating the location of the terminal device, a transmission frequency of a positioning-related reference signal.

13. The electronic device of claim 1, wherein the communication signal comprises one or more of the following signals: a positioning reference signal (PRS), a data demodulation reference signal (DMRS), a channel state measurement reference signal (CSI-RS), a sounding reference signal (SRS), and a communication data signal.

14. The electronic device of claim 5 or 8, wherein the positioning-related reference signal comprises one or more of the following reference signals: a positioning reference signal (PRS), a demodulation reference signal (DMRS), a channel state information reference signal (CSI-RS), and a sounding reference signal (SRS).

15. A method for a control device side of a wireless communication system, comprising:
transmitting a multiplexed signal to a terminal device, wherein the multiplexed signal multiplexes a communication signal and a sensing signal, the sensing signal is at least used for sensing a distance between the terminal device and the electronic device, an angle between the terminal device and the electronic device, and/or a moving speed of the terminal device so as to determine a location of the terminal device, and
receiving an echo signal resulting from at least reflection, refraction and/or diffraction of the sensing signal by the terminal device.

16. An electronic device for a terminal device side of a wireless communication system, comprising:
a processing circuit configured to receive a multiplexed signal from a base station,
wherein the multiplexed signal multiplexes a communication signal and a sensing signal,
wherein an echo signal resulting from at least reflection, refraction and/or diffraction of the sensing signal by the electronic device is transmitted to at least one or more base stations that comprise the base station, and
wherein the sensing signal is at least used for sensing a distance between the electronic device and the base station, an angle between the electronic device and the base station, and/or a moving speed of the electronic device so as to determine a location of the electronic device.

17. The electronic device of claim 16, wherein the communication signal and the sensing signal are time-division multiplexed in units of symbols.

18. The electronic device of claim 16 or 17, wherein the processing circuit is further configured to receive, from the base station, multiplexing information indicating how the communication signal and the sensing signal are multiplexed.

19. The electronic device of claim 16 or 17, wherein the processing circuit is further configured to:
receive, from the base station, information indicating a transmission frequency of a positioning-related reference signal, wherein the transmission frequency of the reference signal is dynamically adjusted according to a sensing result of the moving speed of the electronic device based on the sensing signal.

20. The electronic device of claim 16 or 17, wherein the processing circuit is further configured to:
transmit, to the base station, information indicating a positioning requirement, and
receive, from the base station, information indicating a transmission frequency of a positioning-related reference signal, wherein the transmission frequency of the reference signal is dynamically adjusted according to a positioning accuracy requirement.

21. The electronic device of claim 16 or 17, wherein the processing circuit is further configured to:
receive, from the base station, information indicating a location of the electronic device, wherein the information comprises a sensing result based on the sensing signal or a joint positioning result, wherein the sensing result comprises the distance, the sensed angle, the moving speed, and/or the location of the electronic device, and the joint positioning result comprises a location of the electronic device determined according to both a first location of the electronic device based on a mobile communication positioning technology and a second location based on the sensing result,
autonomously determine a location of the electronic device; and
feed back to the base station based on a difference between the autonomously determined location and the location indicated in the information received from the base station.

22. The electronic device of claim 21, wherein autonomously determining the location of the electronic device comprises estimating the location of the electronic device based on one or more of the following information: location information obtained based on a RAT-only-DL positioning technology, location information obtained based on an auxiliary global navigation satellite system (A-GNSS), location information obtained based on a global positioning system (GPS), a last positioning result, and movement information of the electronic device determined based on a motion sensor.

23. A method for a terminal device side of a wireless communication system, comprising:
receiving a multiplexed signal from a base station,
wherein the multiplexed signal multiplexes a communication signal and a sensing signal,
wherein an echo signal resulting from at least reflection, refraction and/or diffraction of the sensing signal by the electronic device is transmitted to at least one or more base stations that comprise the base station, and
wherein the sensing signal is at least used for sensing a distance between the electronic device and the base station, an angle between the electronic device and the base station, and/or a moving speed of the electronic device so as to determine a location of the electronic device.

24. An electronic device for a core network device side of a wireless communication system, comprising:
a processing circuit configured to:
receive, from a base station, information indicating an echo signal resulting from at least reflection, refraction and/or diffraction of a sensing signal by a terminal device,
determine a sensing result for the terminal device at least based on a difference between the sensing signal and the echo signal, wherein the sensing result comprises a distance between the terminal device and the base station, an angle between the terminal device and the base station, a moving speed of the terminal device, and/or a location of the terminal device, and
transmit the sensing result to the base station.

25. The electronic device of claim 24, wherein the difference comprises one or more of: a doppler shift, a time of flight, a change of amplitude, a change of frequency, and a change of phase.

26. The electronic device of claim 24 or 25, wherein the circuit system is further configured to:
receive, from the base station, request information for requesting one or more other base stations to cooperate so as to sense the location of the terminal device; and
transmit, to one or more base stations that participate in positioning the terminal device based on a mobile communication positioning technology, information indicating participation in cooperative sensing, wherein the mobile communication positioning technology comprises one or more of the following: auxiliary global navigation satellite system (A-GNSS), Downlink-Time Difference of Arrival (DL-TDOA), Uplink-Time Difference of Arrival (UL-TDOA), Downlink-Angle of Departure (DL-AoD), Uplink-Angle of Arrival (UL-AoA), Multi-Round Trip Time (Multi-RTT), and New Radio Enhanced Cell ID (NR E-CID).

27. A method for a core network side of a wireless communication system, comprising:
receiving, from a base station, information indicating an echo signal resulting from at least reflection, refraction and/or diffraction of a sensing signal by a terminal device,
determining a sensing result for the terminal device at least based on a difference between the sensing signal and the echo signal, wherein the sensing result comprises a distance between the terminal device and the base station, an angle between the terminal device and the base station, a moving speed of the terminal device, and/or a location of the terminal device, and
transmitting the sensing result to the base station.

28. A non-transitory computer readable storage medium storing executable instructions which, when executed, implement the method of any one of claims 15, 23, and 27.

29. A device, comprising:
a processor; and
a storage apparatus that stores executable instructions which, when executed, implement the method of any one of 15, 23, and 27.

30. A computer program product comprising instructions which, when executed by a processor, cause the processor to execute the method of any one of claims 15, 23, and 27.
